# EUROPEAN PATENT SPECIFICATION

(11) **EP 4 020 942 B1**
(45) Date of publication and mention of the grant of the patent: **09.04.2025**
(21) Application number: 20950855.5
(22) Date of filing: 31.08.2020
(51) Int. Cl.: H04L 9/40, H04L 12/46, H04L 69/22

(54) **SECURITY PROTECTION METHOD AND DEVICE AND STORAGE MEDIUM**
SICHERHEITSSCHUTZVERFAHREN UND -VORRICHTUNG SOWIE SPEICHERMEDIUM
PROCÉDÉ ET DISPOSITIF DE PROTECTION DE SÉCURITÉ ET SUPPORT DE STOCKAGE

(43) Date of publication of application: 29.06.2022
(73) Proprietor: Shenzhen Yinwang Intelligent Technologies Co., Ltd., Shenzhen, Guangdong 518129 (CN)
(72) Inventor: ZHONG, Steven Yin, Shenzhen, Guangdong 518129 (CN); YANG, Yanjiang, Shenzhen, Guangdong 518129 (CN); WEI, Zhuo, Shenzhen, Guangdong 518129 (CN)
(74) Representative: MERH-IP Matias Erny Reichl Hoffmann Patentanwälte PartG mbB
(86) International application number: PCT/CN2020/112440
(87) International publication number: WO 2022/041186

(56) References cited:
- CN-A- 101 984 598
- CN-A- 108 023 872
- CN-A- 108 632 201
- US-A1- 2009 276 830
- US-A1- 2013 336 331
- US-A1- 2016 072 781
- US-A1- 2016 149 725
- US-A1- 2018 131 700

## Description

### TECHNICAL FIELD

This application relates to the field of communications technologies, and in particular, to a security protection method, a device, and a storage medium.

### BACKGROUND

With the development of modern information technologies, there are increasingly more electronic products in a vehicle, and complexity is increasingly higher. Automotive Ethernet technologies are more widely used in the automotive field. In automotive Ethernet, a network system in which electronic control units (electronic control units, ECUs) in a vehicle are interconnected is established by virtue of Ethernet technologies. US 2016/0072781 A1 relates to systems supporting interoperability of devices having unequal capabilities. US 2009/0276830 A1 relates to the field of communication networks, and more specifically to facilitating protection of a maintenance entity group.

To ensure security of data exchanged between the ECUs in the vehicle, a security protection mechanism needs to be established. However, in existing security protection mechanisms, such as a security protection mechanism based on transport layer security (transport layer security, TLS), a security protection mechanism based on Internet protocol security (internet protocol security, IPSEC), and a security protection mechanism based on a media access control security (media access control security, MACsec) technology, there are high requirements on device performance. However, the ECU in the vehicle usually has low performance. Therefore, a security protection mechanism for low-performance devices needs to be established.

### SUMMARY

Embodiments of this application provide a security protection method, to ensure security of data exchanged between low-performance devices. The present invention is defined according to the independent claims. The dependent claims recite advantageous embodiments of the invention.

It should be understood that the security protection method provided in this application may be performed by an electronic apparatus. The electronic apparatus may be a security protection apparatus, for example, may be an entire computing device, or may be some components in the computing device, for example, a chip related to security protection. Specifically, the electronic apparatus may be a terminal such as an ECU in a vehicle, or may be a system chip that can be disposed in the terminal. The system chip is also referred to as a system on a chip (system on a chip, SoC), or a system-on-a-chip chip.

### BRIEF DESCRIPTION OF DRAWINGS

FIG. 1 is a schematic diagram depicting an application scenario of a security protection method according to an embodiment of this application;
FIG. 2 is a schematic flowchart depicting a security protection method according to an embodiment of this application;
FIG. 3 is a schematic flowchart depicting another security protection method according to an embodiment of this application;
FIG. 4 shows a possible packet format according to an embodiment of this application;
FIG. 5 is a schematic flowchart depicting another security protection method according to an embodiment of this application;
FIG. 6 is a schematic flowchart depicting another security protection method according to an embodiment of this application;
FIG. 7A and FIG. 7B are a schematic flowchart depicting another security protection method according to an embodiment of this application;
FIG. 8a is a schematic diagram depicting input content of a related parameter according to an embodiment of this application;
FIG. 8b is a schematic diagram depicting input content of another related parameter according to an embodiment of this application;
FIG. 8c is a schematic diagram depicting input content of another related parameter according to an embodiment of this application;
FIG. 8d is a schematic diagram depicting input content of another related parameter according to an embodiment of this application;
FIG. 9a is a schematic diagram depicting input content of another related parameter according to an embodiment of this application;
FIG. 9b is a schematic diagram depicting input content of another related parameter according to an embodiment of this application;
FIG. 9c is a schematic diagram depicting input content of another related parameter according to an embodiment of this application;
FIG. 9d is a schematic diagram depicting input content of another related parameter according to an embodiment of this application;
FIG. 10 is a schematic diagram depicting a structure of a vehicle according to an embodiment of this application;
FIG. 11 is a diagram depicting a system architecture of a security protection method according to an embodiment of this application;
FIG. 12 is a schematic diagram depicting a structure of a security protection apparatus according to an embodiment of this application;
FIG. 13 is a schematic diagram depicting another structure of a security protection apparatus according to an embodiment of this application; and
FIG. 14 is a schematic diagram depicting another structure of a security protection apparatus according to an embodiment of this application.

### DESCRIPTION OF EMBODIMENTS

The following describes embodiments of this application with reference to accompanying drawings. It is clear that, the described embodiments are merely some but not all of the embodiments of this application. A person of ordinary skill in the art may learn that, with development of technologies and emergence of new scenarios, the technical solutions provided in the embodiments of this application are also applicable to a similar technical problem.

In the specification, claims, and accompanying drawings of this application, terms such as "first" and "second" are intended to distinguish between similar objects, but do not necessarily indicate a specific order or sequence. It should be understood that data used in such a way is interchangeable in proper circumstances, so that the embodiments described herein can be implemented in other orders than the order illustrated or described herein. In addition, terms "include" and "have" and any variants thereof are intended to cover the non-exclusive inclusion. For example, a process, method, system, product, or device that includes a list of steps or modules is not necessarily limited to those expressly listed steps or modules, but may include other steps or modules not expressly listed or inherent to such a process, method, product, or device. Naming or numbering of steps in this application does not mean that the steps in method procedures need to be performed in a time/logical order indicated by the naming or numbering. An execution order of the steps in the procedures that have been named or numbered can be changed based on a technical objective to be achieved, as long as same or similar technical effects can be achieved. Division into modules in this application is logical division and may be other division in an actual implementation. For example, a plurality of modules may be combined or integrated into another system, or some features may be ignored or not performed. In addition, the displayed or discussed mutual couplings or direct couplings or communication connections may be implemented through some ports. The indirect couplings or communication connections between the modules may be implemented in electronic or other similar forms. This is not limited in this application. In addition, modules or submodules described as separate parts may or may not be physically separate, may or may not be physical modules, or may be distributed into a plurality of circuit modules. Some or all of the modules may be selected based on actual requirements to achieve the objectives of the solutions of this application.

To better understand the technical solutions provided in this application, the following first describes a research idea of the solutions provided in this application.

To ensure security of communication between devices in a network, a security protection mechanism needs to be established, for example, a security protection mechanism based on transport layer security (transport layer security, TLS), a security protection mechanism based on Internet protocol security (internet protocol security, IPSEC), a security protection mechanism based on media access control security (media access control security, MACsec), and a security protection mechanism based on secure onboard communication (Secure Onboard Communication, SecOC). However, an existing security protection mechanism has a disadvantage, and is not applicable to a low-performance device. The low-performance device in this application may be a device that cannot process a large amount of data, or a device in a scenario in which there is no need to process a large amount of data. For example, a possible application scenario includes the Internet of vehicles, and the low-performance device may include a device in automotive Ethernet. Alternatively, a possible application scenario may include the Internet of things (Internet of things, IoT), and the low-performance device may include a device in the Internet of things. In this application, the low-performance device is also sometimes referred to as a poor-performance device. When a difference between the two devices is not emphasized, the two devices have a same meaning. One of reasons why the existing security protection mechanism is not applicable to the poor-performance device is that the existing security protection mechanism has a high requirement on processing performance of the device. For example, in a security protection mechanism based on a TLS technology, key agreement is required, two devices consume a long time period to establish communication, and an encryption speed is low. In addition, based on a session mechanism, different sessions need to be established for different services, and this is difficult for the low-performance device. For another example, in a security protection mechanism based on an IPsec technology, many items need to be preconfigured, key agreement is also required, and an encryption speed is low. In a security protection mechanism based on a MACsec technology, a large amount of data needs to be encrypted, and a chip is required to support an algorithm. This is not applicable to the low-performance device either. For another example, a security protection mechanism based on SecOC needs to rely on an automotive open system architecture (AUTomotive open system architecture, AUTOSAR) software stack, and a security technology based on SecOC does not support an encryption function.

The existing security protection mechanism in the conventional technology is not applicable to the low-performance device, and security of communication between low-performance devices cannot be ensured. Therefore, a security protection mechanism for the low-performance device urgently needs to be designed.

To resolve the foregoing problem, this application provides a security protection method. Different security levels are set for a plurality of VLANs in Ethernet, and security protection is performed on communication in the VLANs based on the different security levels, or security protection is not performed on communication in the VLANs. In this manner, communication between devices in a network does not require full-channel protection. In other words, security protection does not need to be performed on all data sent between any two devices. Through such design, a device does not need to have a high-performance processing capability. In other words, a performance requirement on the device is low. In addition, in the solutions provided in this application, a complete protection system is established for the low-performance device, and integrity protection, anti-replay attack protection, and confidentiality protection can be performed on data sent between devices.

With reference to the foregoing research idea, the following specifically describes the solutions provided in this application.

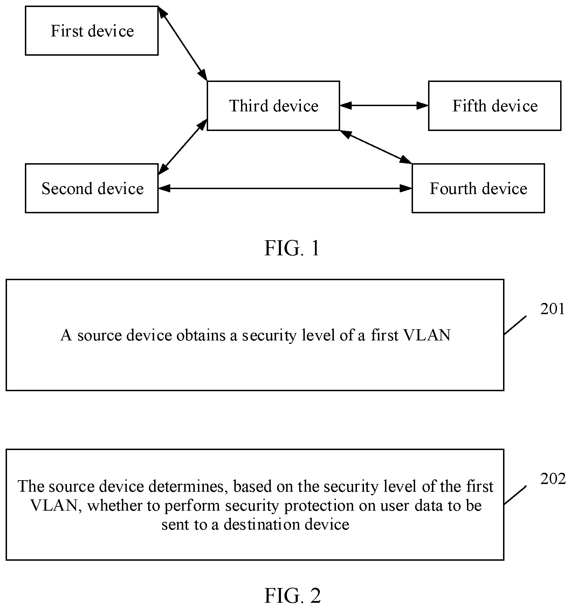

FIG. 1 is a schematic diagram depicting an application scenario of a security protection method according to this application. As shown in FIG. 1, the Ethernet includes a plurality of devices, for example, a first device, a second device, a third device, a fourth device, and a fifth device shown in FIG. 1. The Ethernet is divided into a plurality of virtual local area networks (virtual local area networks, VLANs). For example, the Ethernet is divided into three VLANs. A first VLAN includes the first device and the third device, a second VLAN includes the second device, the third device, and the fifth device, and a third VLAN includes the third device and the fourth device. Dividing the Ethernet into the plurality of VLANs may be understood as dividing the Ethernet into a plurality of logically isolated broadcast domains. Devices in only a same VLAN can communicate with each other. Restricting a data packet into one VLAN can prevent a broadcast storm, and enable a network to be relatively simple and intuitive during network management. There may be a plurality of manners for division into VLANs, for example, port-based division into VLANs. Each VLAN corresponds to a unique port number. For another example, protocol-based division into VLANs or service requirement-based division into VLANs may be used. The embodiments of this application only concern that the Ethernet is divided into the plurality of VLANs. A specific standard used to divide the Ethernet into the plurality of VLANs is not limited in this application. The solutions provided in this application may be applied to a communication scenario of a low-performance device. For example, the solutions provided in this application may be applied to an automotive Ethernet scenario. For example, the following provides a manner of performing division into VLANs based on different service types by using different protocols in the automotive Ethernet scenario. For example, a service 1 includes remote control, a driving mode, parameter display, and an OTA service interaction packet. A protocol used for these services is SOMEIP. The service 1 is classified into one VLAN. A service 2 includes log uploading and monitoring data uploading. A protocol used for these services is also SOME/IP. The service 2 is classified into one VLAN. For understanding, refer to Table 1. Details are not described herein one by one.

**Table 1**

| Service | Protocol |
|---|---|
| Remote control, driving mode, parameter display, and over the air (over the air, OTA) service interaction packet | Communications protocol used in the automotive industry (such as scalable service-oriented middleware over IP, SOME/IP) |
| Log uploading and monitoring data uploading | SOMEIP |
| Remote diagnosis, OTA upgrade, on-board diagnostics (on-board diagnostic system, OBD) upgrade, and OBD diagnosis | Diagnostics over IP (diagnostic over IP, DoIP) |
| Network management | UDP network management (UDP network management) |
| Time synchronization | Generalized precision time protocol (generalized |
| | precision time protocol, gPTP) |
| Streaming | Audio video bridging (audio video bridging, AVB) |
| Lidar (lidar) configuration and point cloud data | User datagram protocol (user datagram protocol, UDP) |
| Driving record | Real time streaming protocol (real time streaming protocol, RTSP) |
| Internet access request and map | Transmission control protocol/Internet protocol (transmission control protocol/internet protocol, /internet protocol, TCP/IP) |

In this scenario, the first device, the second device, and the fourth device each may be an ECU, and the third device may be a gateway. The solutions provided in this application may be further applied to an Internet of things scenario. In this scenario, the first device, the second device, and the fourth device each may be a home electronic device, and the third device may be a home gateway.

FIG. 2 is a schematic flowchart depicting a security protection method according to an embodiment of this application.

As shown in FIG. 2, the security protection method provided in this embodiment of this application may include the following steps.

201: A source device obtains a security level of a first VLAN.

The source device and a destination device corresponding to the source device are devices in the first VLAN, the first VLAN is one of a plurality of VLANs included in Ethernet, and each of the plurality of VLANs corresponds to one security level.

That the Ethernet includes the plurality of VLANs and how to perform division into the VLANs have been described above. Details are not described herein again. The following describes how to classify security levels of the plurality of VLANs in the Ethernet.

In a possible implementation, the security level of each VLAN may be customized. For example, security levels may include a high level and a low level. Alternatively, there may be more security levels. For example, security levels may include a high level, a medium level, and a low level. A higher security level corresponding to a VLAN indicates that data transmitted in the VLAN requires more comprehensive security protection. For example, when a security level of a VLAN is the high level, integrity protection, anti-replay attack protection, and confidentiality protection need to be performed on data transmitted in the VLAN. When a security level of a VLAN is the medium level, integrity protection and anti-replay attack protection need to be performed on data transmitted in the VLAN. When a security level of a VLAN is the low level, security protection may not be performed on data transmitted in the VLAN, to avoid a problem that a device needs to process a large amount of data.

In a possible implementation, the security level of each VLAN may be determined through threat analysis. For example, the following provides a manner of determining the security level of each VLAN through threat analysis. It should be noted that a manner of determining the security level of each VLAN by using another threat analysis method should also fall within the protection scope of this application. A possibility of occurrence of a threat, that is, a probability of occurrence of the threat, is recognized with reference to an attribute of the threat, vulnerability of assets, and a used security measure by analyzing a threat path. Threat impact is recognized by analyzing value of a threat object, a threat coverage area, damage severity, remediability, and the like. A method for calculating a threat value based on an attack capability and an attack motive of a threat source, a threat occurrence probability, and an impact degree is analyzed and determined. Through comprehensive analysis of the foregoing factors, a value is assigned to a possibility of the threat. Values assigned to threats are classified into five levels: very high, high, medium, low, and very low. A higher level indicates a higher possibility of occurrence of the threat. A higher possibility of occurrence of the threat indicates a higher specified security level corresponding to the VLAN.

202: The source device determines, based on the security level of the first VLAN, whether to perform security protection on user data to be sent to the destination device.

When sending the data to the destination device in the first VLAN, the source device may determine, based on the security level of the first VLAN, whether to perform security protection on the user data to be sent to the destination device. It should be noted that, in this application, the user data is also sometimes referred to as data for short. This should be understood by a person skilled in the art.

In a possible implementation, whether to perform security protection on the user data to be sent to the destination device may be determined by querying a table. The following provides descriptions with reference to Table 2 and Table 3.

**Table 2**

| VLAN list | Security level |
|---|---|
| VLAN 1 | High |
| VLAN 2 | Medium |
| VLAN 3 | Low |

As shown in Table 2, the VLAN list may record an identifier ID of each of a plurality of VLANs. The source device may determine, by querying an ID of a VLAN, a security level corresponding to the VLAN. It is assumed that the following is specified: When a security level is high or medium, security protection needs to be performed on to-be-sent data, and when a security level is low, security protection does not need to be performed on to-be-sent data. In this case, if the first VLAN is the VLAN 1, the source device may learn, by querying Table 2, that the security level corresponding to the first VLAN is high, and security protection needs to be performed on the user data to be sent to the destination device. If the first VLAN is the VLAN 2, the source device may learn, by querying Table 2, that the security level corresponding to the first VLAN is medium, and security protection needs to be performed on the user data to be sent to the destination device. If the first VLAN is the VLAN 3, the source device may learn, by querying Table 2, that the security level corresponding to the first VLAN is low, and security protection does not need to be performed on the user data to be sent to the destination device.

**Table 3**

| VLAN list | Security level | Security protection |
|---|---|---|
| VLAN 1 | High | Integrity protection, anti-replay protection, and confidentiality protection |
| VLAN 2 | Medium | Integrity protection and anti-replay protection |
| VLAN 3 | Low | None |

As shown in Table 3, a security level corresponding to a VLAN and security protection corresponding to the security level may be further determined by querying a table. For example, if the first VLAN is the VLAN 1, the source device may learn, by querying Table 2, that the security level corresponding to the first VLAN is high, and security protection needs to be performed on the user data to be sent to the destination device. Specifically, integrity protection, anti-replay protection, and confidentiality protection need to be performed on communication data in the first VLAN. If the first VLAN is the VLAN 2, the source device may learn, by querying Table 2, that the security level corresponding to the first VLAN is medium, and security protection needs to be performed on the user data to be sent to the destination device. In addition, integrity protection and anti-replay protection need to be performed on communication data in the first VLAN. If the first VLAN is the VLAN 3, the source device may learn, by querying Table 2, that the security level corresponding to the first VLAN is low, and security protection does not need to be performed on the user data to be sent to the destination device.

It should be noted that, other than determining the security level of the first VLAN by querying a table, the security level of the first VLAN may be alternatively obtained in another manner. There may be a plurality of specific manners of obtaining the security level of the first VLAN.

It can be learned from the embodiment corresponding to FIG. 2 that, in the solutions provided in this application, a security level is set for each of the plurality of VLANs included in the Ethernet, and whether to perform security protection on communication data in a VLAN is determined based on a security level of the VLAN. According to the solutions provided in this application, security protection is performed or no security protection is performed on data in a VLAN based on a security level of the VLAN. This avoids a need to protect communication between any two devices in the Ethernet. According to the solutions provided in this application, an amount of data that needs to be processed when a device performs security protection can be reduced, a requirement on processing performance of the device is low, and this is applicable to security protection of communication data between low-performance devices.

In the solutions provided in this application, a complete protection system is established for the low-performance device, and integrity protection, anti-replay attack protection, and confidentiality protection can be performed on data sent between devices. The following provides detailed descriptions.

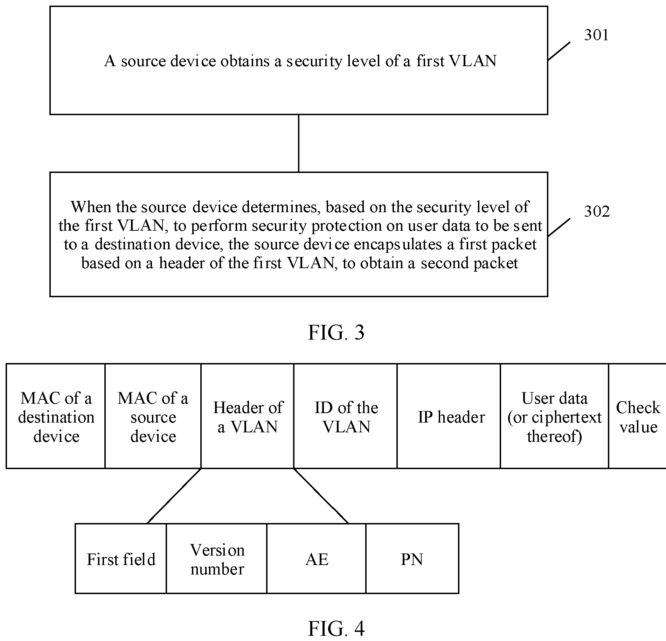

FIG. 3 is a schematic flowchart depicting another security protection method according to an embodiment of this application.

As shown in FIG. 3, the another security protection method provided in this embodiment of this application may include the following steps.

301: A source device obtains a security level of a first VLAN.

Step 301 may be understood with reference to step 201 in the embodiment corresponding to FIG. 2. Details are not described herein again.

302: When the source device determines, based on the security level of the first VLAN, to perform security protection on user data to be sent to a destination device, the source device encapsulates a first packet based on a header of the first VLAN, to obtain a second packet.

The header of the first VLAN includes a first field, a counter-related PN field, and a decryption type-related AE field, the first field is used to indicate the destination device to perform security verification on received data, the PN field is used by the destination device to verify whether the received data is replayed data, and the AE field is used by the destination device to determine whether to decrypt the data. The first packet is a packet obtained after the source device encapsulates the data based on an identifier ID of the first VLAN. In a possible implementation, the header of the first VLAN may further include a version (version) number.

It can be learned from the embodiment corresponding to FIG. 3 that, in a packet encapsulation process, the source device encapsulates the header of the VLAN after the ID of the VLAN is encapsulated. Therefore, the source device may select, based on the ID of the VLAN, data that needs to be protected. For example, the source device communicates with the destination device in the first VLAN, and the first packet is obtained after the data is encapsulated based on the ID of the first VLAN. Whether to perform security protection on the data may be determined based on the ID of the first VLAN. If it is determined, based on the ID of the first VLAN, that the data does not need to be protected, the first packet does not need to be encapsulated based on the header of the first VLAN. If it is determined, based on the ID of the first VLAN, that the data needs to be protected, the first packet may be encapsulated based on the header of the first VLAN, and a value of each field in the header of the first VLAN may be set. In addition, the header of the first VLAN includes the first field, the PN field, and the AE field. When parsing a received packet, the destination device may determine and identify a frame format based on the first field to determine whether to perform security verification, determine, based on the PN field, whether the packet is a replayed packet, and determine, based on the AE field, whether to perform decryption.

FIG. 4 shows a possible packet format according to an embodiment of this application. As shown in FIG. 4, user data is encapsulated based on an Internet protocol (Internet protocol, IP) header. The user data may be plaintext or ciphertext. Then, a packet is encapsulated based on an ID (for example, a VLAN tag) of a VLAN. Subsequently, encapsulation is performed based on a header of the VLAN. Then, encapsulation is performed based on physical addresses (media access control address, MAC) of the source device and the destination device. The packet further includes a check code. The check code may be used to confirm integrity of the packet and perform integrity check on the packet.

In the solutions provided in this application, security protection may be selectively performed on data. For example, security protection may not be performed on the data, or integrity protection, anti-replay attack protection, and confidentiality protection may be performed on the data. In a preferred implementation, integrity protection and anti-replay attack protection may be performed on the data, and confidentiality protection may not be performed. In a preferred implementation, integrity protection, anti-replay attack protection, and confidentiality protection may be performed on the data. This is described below in detail.

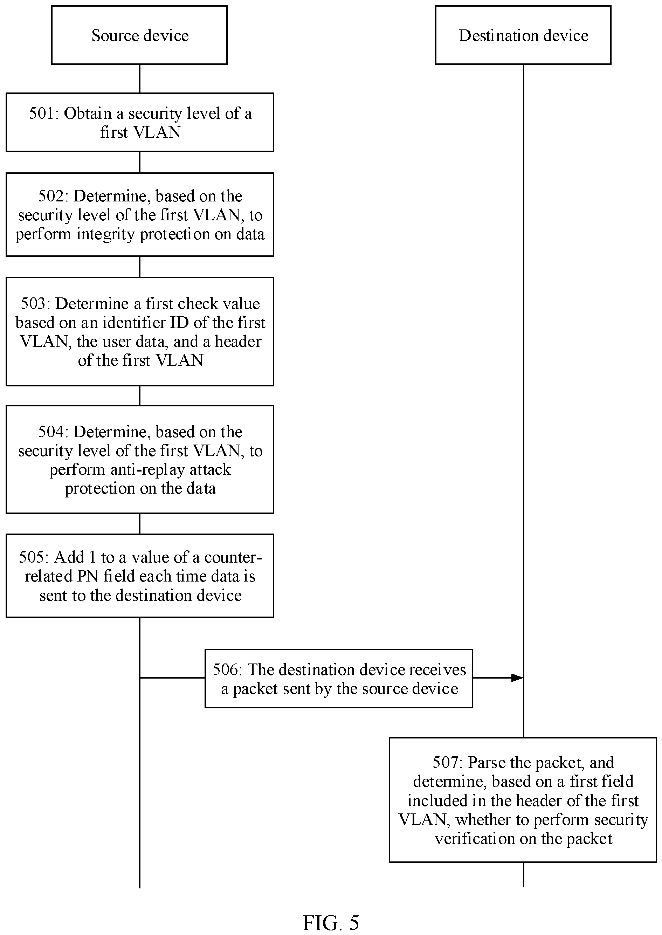

FIG. 5 is a schematic flowchart depicting another security protection method according to an embodiment of this application.

As shown in FIG. 5, the another security protection method provided in this embodiment of this application may include the following steps.

501: A source device obtains a security level of a first VLAN.

Step 501 may be understood with reference to step 201 in the embodiment corresponding to FIG. 2. Details are not described herein again.

502: The source device determines, based on the security level of the first VLAN, to perform integrity protection on data.

503: The source device determines a first check value based on an identifier ID of the first VLAN, the user data, and a header of the first VLAN.

The first check value is used to verify integrity of the data.

An objective of the check value is to generate unique additional information for a packet sent by the source device, so that a destination device may determine, based on the additional information, whether a received packet is complete, accurate, or tampered with.

In most scenarios, when integrity protection is performed on the packet, anti-replay attack protection further needs to be performed on the packet. Therefore, in a possible implementation, the method may further include 504: The source device determines, based on the security level of the first VLAN, to perform anti-replay attack protection on the data. It should be noted that the anti-replay attack protection is also sometimes referred to as anti-replay protection in this application. When a difference between the anti-replay attack protection and the anti-replay protection is not emphasized, the anti-replay attack protection and the anti-replay protection represent a same meaning.

For step 504, the method may further include step 505: Add 1 to a value of a counter-related PN field each time the source device sends data to the destination device.

The header of the first VLAN includes the PN field, and the value of the PN field is increased by 1 each time the source device sends data to the destination device. For example, when the source device sends data to the destination device for the first time, the value of the PN field is 1, when the source device sends data to the destination device for the second time, the value of the PN field is 2, and so on.

506: The destination device receives a packet sent by the source device.

The packet is a packet obtained after the source device encapsulates a first packet based on the header of the first VLAN, and the first packet is a packet obtained after the source device encapsulates, based on the identifier ID of the first VLAN, the data to be sent to the destination device. The packet sent by the source device has been described above, and details are not described herein again.

507: The destination device parses the packet, and determines, based on a first field included in the header of the first VLAN, whether to perform security verification on the packet.

In a possible implementation, if determining, based on the first field, that security verification needs to be performed on the packet, the destination device determines a second check value based on the identifier ID of the first VLAN, the data, and the header of the first VLAN. The destination device verifies integrity of the data by comparing the second check value with the first check value. If the second check value is the same as the first check value, it indicates that the received packet is accurate and is not tampered with. If the second check value is different from the first check value, it indicates that the received packet is inaccurate or is tampered with. It should be noted that an algorithm for determining the second check value by the destination device based on the identifier ID of the first VLAN, the data, and the header of the first VLAN is the same as an algorithm for determining the first check value by the source device.

In a possible implementation, if determining, based on the first field, that security verification needs to be performed on the packet, the destination device determines, based on the value of the PN field, whether the received packet is a replayed packet. Each time the destination device receives a packet, the destination device stores a value of a PN field included in the packet. If a value of a PN field in a next received packet is not greater than the locally stored value of the PN field, the destination device considers that the packet is a replayed packet. For example, if a value of a PN field in a packet is 1 after the destination device receives the packet for the first time, the destination device locally stores the value 1 of the PN field. After the destination device receives a packet for the second time, if a value of a PN field in the packet is 2, the destination device updates the locally stored value of the PN field from 1 to 2. If a value of a PN field in a packet is 2 after the destination device receives the packet for the third time, the destination device may determine that the packet received for the third time is a replayed packet. This is because the value of the PN field in the packet received for the third time is not greater than the locally stored value of the PN field, that is, not greater than 2 in this example.

In a possible implementation, if determining, based on the first field, not to perform security verification on the packet, the destination device needs only to parse the packet, and does not need to perform security verification on the packet.

For example, if the source device determines that security protection is required in the first VLAN, a value of the first field is set to 0x99F6. If the destination device determines, after parsing the packet, that the first field is 0x99F6, the destination device determines that security verification needs to be performed on the packet. If the destination device determines, after parsing the packet, that the first field is not 0x99F6, the destination device determines that security verification does not need to be performed on the packet.

In a preferred implementation, confidentiality protection may be further performed on the packet. The following describes this embodiment.

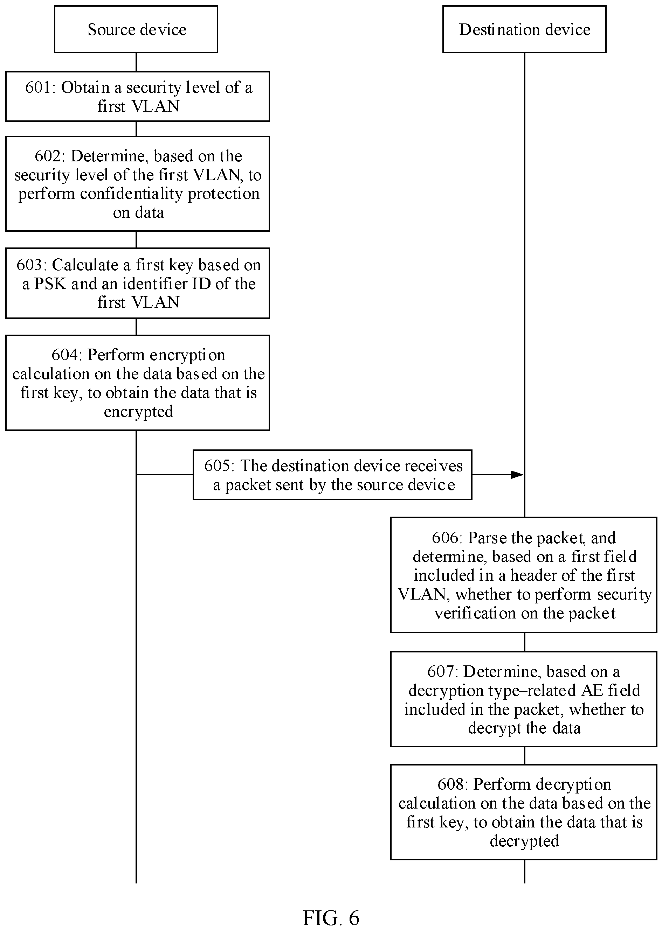

FIG. 6 is a schematic flowchart depicting another security protection method according to an embodiment of this application.

As shown in FIG. 6, the another security protection method provided in this embodiment of this application may include the following steps.

601: A source device obtains a security level of a first VLAN.

Step 601 may be understood with reference to step 201 in the embodiment corresponding to FIG. 2. Details are not described herein again.

602: The source device determines, based on the security level of the first VLAN, to perform confidentiality protection on data.

The source device may set a value of an AE field to indicate a destination device whether to decrypt a received packet. For example, if the source device determines, based on the security level of the first VLAN, to perform confidentiality protection on the data, the source device sets the value of the AE field to 0x1, or if the source device determines, based on the security level of the first VLAN, not to perform confidentiality protection on the data, the source device sets the value of the AE field to 0x0.

603: The source device calculates a first key based on a pre-shared key (pre-shared key, PSK) and an identifier ID of the first VLAN.

The first key is used to encrypt the user data.

A key is determined based on the PSK and a unique identifier of each VLAN, and user data in the VLAN is encrypted by using the key corresponding to the VLAN.

604: The source device performs encryption calculation on the data based on the first key, to obtain the data that is encrypted.

A method for encrypting data based on a key in a related technology may be used in this embodiment of this application. Details are not described herein.

605: The destination device receives a packet sent by the source device.

The packet is a packet obtained after the source device encapsulates a first packet based on a header of the first VLAN, and the first packet is a packet obtained after the source device encapsulates, based on the identifier ID of the first VLAN, the data to be sent to the destination device. The packet sent by the source device has been described above, and details are not described herein again.

606: The destination device parses the packet, and determines, based on a first field included in the header of the first VLAN, whether to perform security verification on the packet.

607: The destination device determines, based on a decryption type-related AE field included in the packet, whether to decrypt the data.

608: The destination device performs decryption calculation on the data based on the first key, to obtain the data that is decrypted. The first key is a key obtained by the destination device through calculation based on the pre-shared key PSK and the identifier ID of the first VLAN.

In a possible implementation, it is assumed that it is determined, based on the first field, that security verification needs to be performed on the packet, and it is determined, based on the AE field, that the packet needs to be decrypted. For example, it is pre-specified that if a value of the AE field is 0x1, it indicates that decryption is required, or if a value of the AE field is 0x0, it indicates that decryption is required. If determining, based on the AE field, that the packet needs to be decrypted, the destination device performs decryption calculation on the data based on the first key, to obtain the data that is decrypted, where the first key is the key obtained by the destination device through calculation based on the pre-shared key PSK and the identifier ID of the first VLAN.

In a possible implementation, if determining, based on the first field, not to perform security verification on the packet, the destination device needs only to parse the packet, and does not need to perform security verification on the packet.

It should be noted that, when confidentiality protection is performed on the packet, integrity protection and anti-replay attack protection further need to be performed on the packet. Therefore, in a possible implementation, the method may further include: The source device determines, based on the security level of the first VLAN, to perform integrity protection on the data. The source device determines, based on the security level of the first VLAN, to perform anti-replay attack protection on the data. For a process in which the source device performs integrity protection on the data and performs anti-replay attack protection on the data, refer to the description in the embodiment corresponding to FIG. 5 for understanding. Details are not described herein again. The source device performs integrity protection and anti-replay attack protection on the packet, and correspondingly, the destination device performs integrity verification and duplicate packet verification on the received packet. For integrity verification, refer to the description of integrity verification in the embodiment corresponding to FIG. 5 for understanding. Details are not described herein again. For replayed packet verification, refer to the description of replayed packet verification in the embodiment corresponding to FIG. 5 for understanding. Details are not described herein again.

In a possible implementation, a check value and ciphertext may be separately calculated by using two different algorithms. For example, the ciphertext is calculated by using a cipher block chaining (cipher block chaining, CBC) algorithm, and the check value is calculated by using a cipher-based message authentication code (CMAC) algorithm. In a possible implementation, the check value and the ciphertext may alternatively be output by using one algorithm. In a preferred implementation, in this application, an Advanced Encryption Standard Galois/Counter Mode (AES-GCM) may be used to output the check value and the ciphertext. This algorithm is fast, and a low-performance device can process a packet without a delay. This algorithm supports integrity check and encryption, or supports only integrity check. If only integrity check is required, a calculation speed can be further improved. AES is a symmetric encryption algorithm. GCM (Galois/counter mode) is a mode used for symmetric encryption. When an encryption operation is performed in the algorithm, input parameters include K, IV, A, and T, and when a decryption operation is performed in the algorithm, input parameters include K, IC, A, and C. The parameter A usually indicates plaintext that does not need to be encrypted, and only integrity protection needs to be performed. A parameter P indicates plaintext that needs to be encrypted. The parameter C indicates ciphertext. The parameter T indicates a check value. K indicates a key, and IV indicates a counter. Data included in the input parameter vary depending on whether a gateway performs layer 2 forwarding or layer 3 forwarding. The following separately provides descriptions.

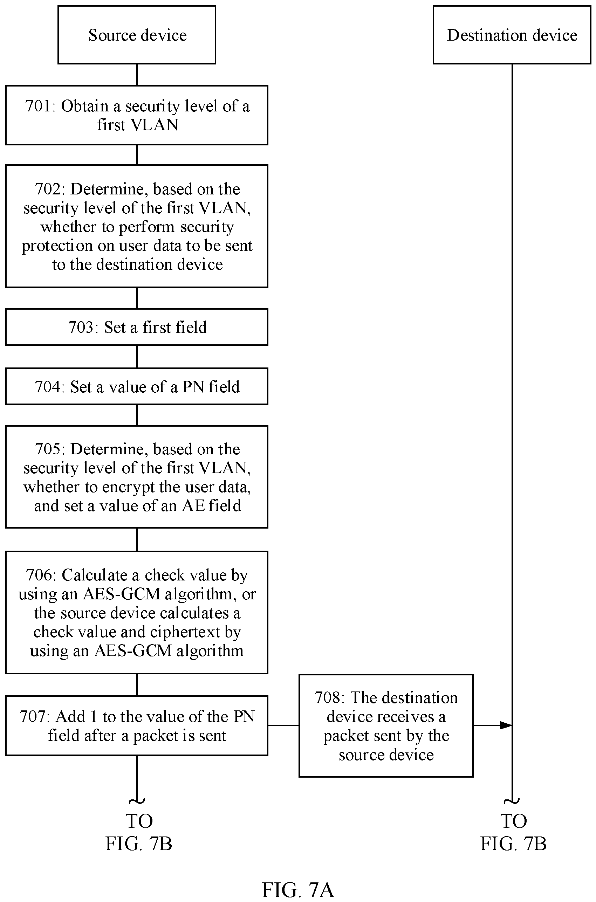

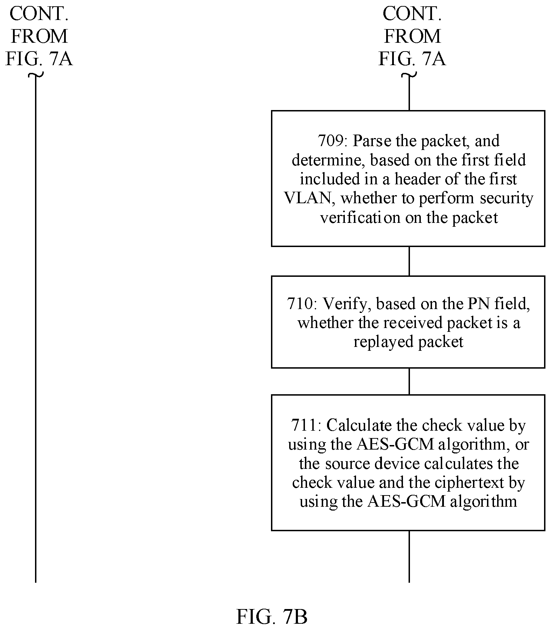

FIG. 7A and FIG. 7B are a schematic flowchart depicting another security protection method according to an embodiment of this application.

As shown in FIG. 7A and FIG. 7B, the another security protection method provided in this embodiment of this application may include the following steps.

701: A source device obtains a security level of a first VLAN.

Step 701 may be understood with reference to step 201 in the embodiment corresponding to FIG. 2. Details are not described herein again.

702: The source device determines, based on the security level of the first VLAN, whether to perform security protection on user data to be sent to a destination device.

If the source device determines, based on to the security level of the first VLAN, not to perform security protection on the user data, the source device does not perform any of step 703 to step 707.

If the source device determines, based on to the security level of the first VLAN, to perform security protection on the user data, the source device performs step 703 to step 707.

703: Set a first field.

The first field is used to indicate the destination device to perform security verification on the user data. For example, if the source device determines that security protection is required in the first VLAN, a value of the first field is set to 0x99F6. If the destination device determines, after parsing a packet, that the first field is 0x99F6, the destination device determines that security verification needs to be performed on the packet. If the destination device determines, after parsing a packet, that the first field is not 0x99F6, the destination device determines that security verification does not need to be performed on the packet.

704: Set a value of a PN field.

Compared with a value of a PN field in a last packet sent by the source device to the destination device, the value of the PN field is increased by 1. For example, when the source device sends a packet to the destination device for the first time, the PN field is 1. When the source device sends a packet to the same destination device for the second time, the value of the PN field is increased by 1, that is, the value is 2.

705: The source device determines, based on the security level of the first VLAN, whether to encrypt the user data, and set a value of an AE field.

The source device may set the value of the AE field to indicate the destination device whether to decrypt a received packet. For example, if the source device determines, based on the security level of the first VLAN, to perform confidentiality protection on the data, the source device sets the value of the AE field to 0x1, or if the source device determines, based on the security level of the first VLAN, not to perform confidentiality protection on the data, the source device sets the value of the AE field to 0x0.

706: The source device calculates a check value by using an AES-GCM algorithm, or the source device calculates a check value and ciphertext by using an AES-GCM algorithm.

In a possible implementation, if the destination device is a gateway, and the gateway is a gateway for layer 2 forwarding, an input parameter K of the AES-GCM is a first key, the first key is obtained through calculation based on a pre-shared key PSK and an ID of the first VLAN, an input parameter IV of the AES-GCM is a value of the counter-related PN field, an input parameter A of the AES-GCM includes a header of the first VLAN, the ID of the first VLAN, the data, an Internet protocol IP header of the data, a physical MAC address of the source device, and a MAC address of the destination device, and an input parameter P of the AES-GCM is null (null). The check value is obtained based on output of the Advanced Encryption Standard Galois/Counter Mode AES-GCM. In this implementation, only integrity protection needs to be performed on the data.

In a possible implementation, if the destination device is a gateway, and the gateway is a gateway for layer 2 forwarding, an input parameter K of the AES-GCM is a first key, an input parameter K of the AES-GCM is a first key, an input parameter IV of the AES-GCM is a value of the counter-related PN field, an input parameter A of the AES-GCM includes a header of the first VLAN, an ID of the first VLAN, a physical MAC address of the source device, and a MAC address of the destination device, and an input parameter P of the AES-GCM includes the data and an Internet protocol IP header of the data. Output of the AES-GCM includes the check value and ciphertext. In this implementation, integrity protection and confidentiality protection need to be performed on the data.

In a possible implementation, if the destination device is a gateway, and the gateway is a gateway for layer 3 forwarding, an input parameter K of the AES-GCM is a first key, the first key is obtained through calculation based on a pre-shared key PSK and an ID of the first VLAN, an input parameter IV of the AES-GCM is a value of the counter-related PN field, an input parameter A of the AES-GCM includes a header of the first VLAN, the ID of the first VLAN, the data, and an Internet protocol IP header of the data, and an input parameter P of the AES-GCM is null. The check value is obtained based on output of the AES-GCM. In this implementation, only integrity protection needs to be performed on the data. When the gateway is a gateway for layer 3 forwarding, after receiving a packet sent by the source device, the gateway removes a MAC address of the source device and a MAC address of the destination device, adds an address of the gateway as a MAC address of the source device, and adds a new MAC address of the destination device. Therefore, the input parameter of the AES-GCM does not need to include the MAC address of the source device and the MAC address of the destination device.

In a possible implementation, if the destination device is a gateway, and the gateway is a gateway for layer 3 forwarding, an input parameter K of the AES-GCM is a first key, an input parameter K of the AES-GCM is a first key, an input parameter IV of the AES-GCM is a value of the counter-related PN field, an input parameter A of the AES-GCM includes a header of the first VLAN, an ID of the first VLAN, and an Internet protocol IP header of the data, and an input parameter P of the AES-GCM is the data. Output of the AES-GCM includes the check value and ciphertext. In this implementation, integrity protection and confidentiality protection need to be performed on the data. When the gateway is a gateway for layer 3 forwarding, after receiving a packet sent by the source device, the gateway removes a MAC address of the source device and a MAC address of the destination device, adds an address of the gateway as a MAC address of the source device, and adds a new MAC address of the destination device. Therefore, the input parameter of the AES-GCM does not need to include the MAC address of the source device and the MAC address of the destination device.

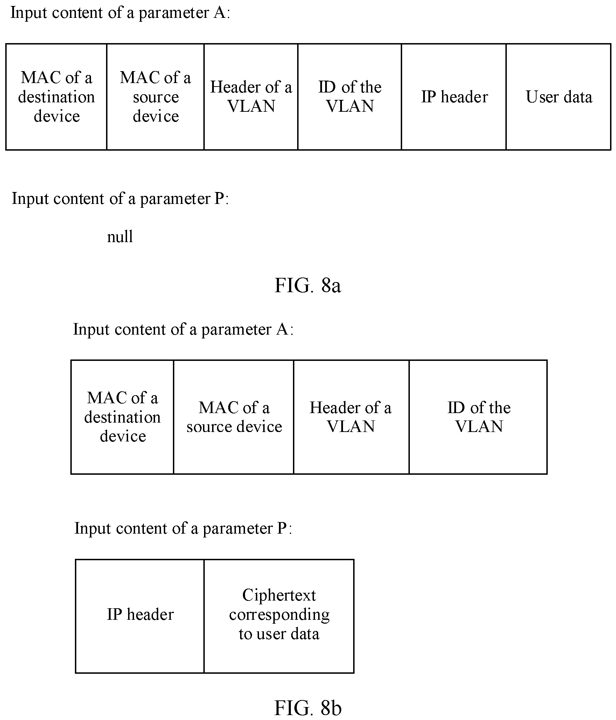

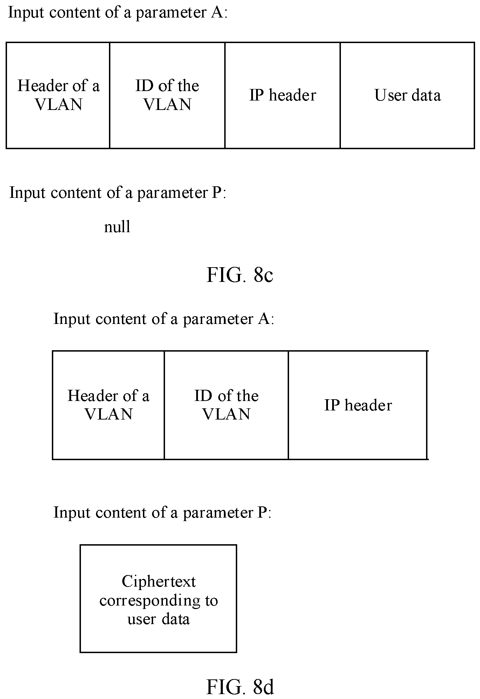

To more intuitively reflect different input parameters of the AES-GCM in different scenarios, the following shows, by using FIG. 8a to FIG. 8d, content included in the input parameters A and P of the AES-GCM when the source device determines the check value and the ciphertext according to the AES-GCM algorithm. FIG. 8a shows input content included in the parameter A and the parameter P when the gateway performs layer 2 forwarding and the source device performs only integrity protection and anti-replay attack protection on the data. FIG. 8b shows input content included in the parameter A and the parameter P when the gateway performs layer 2 forwarding and the source device performs integrity protection, anti-replay attack protection, and confidentiality protection on the data. FIG. 8c shows input content included in the parameter A and the parameter P when the gateway performs layer 3 forwarding and the source device performs only integrity protection and anti-replay attack protection on the data. FIG. 8d shows input content included in the parameter A and the parameter P when the gateway performs layer 3 forwarding and the source device performs integrity protection, anti-replay attack protection, and confidentiality protection on the data.

707: Add 1 to the value of the PN field after the source device sends a packet.

708: The destination device receives the packet sent by the source device.

709: The destination device parses the packet, and determines, based on the first field included in the header of the first VLAN, whether to perform security verification on the packet.

If the destination device determines, based on the first field, not to perform security verification on the packet, the destination device does not perform step 710 or step 711.

If the destination device determines, based on the first field, to perform verification on the packet, the destination device performs step 710 and step 711.

For example, it is specified that when the value of the first field is 0x99F6, the destination device performs security verification on the packet. If the destination device determines, after parsing the packet, that the first field is 0x99F6, the destination device determines that security verification needs to be performed on the packet. If the destination device determines, after parsing the packet, that the first field is not 0x99F6, the destination device determines that security verification does not need to be performed on the packet. In other words, if the destination device determines, after parsing the packet, that the first field is not a preset value, for example, is not 0x99F6, the destination device does not perform a subsequent step related to security verification.

710: The destination device verifies, based on the PN field, whether the received packet is a replayed packet.

If the value of the PN field is not greater than a locally stored value of the PN field, it is determined that the packet is a replayed packet. In this case, the destination device does not perform step 711. To be specific, if determining that the packet is a duplicate packet, the destination device discards the packet, does not verify integrity of the packet, and does not decrypt the packet.

711: The destination device calculates the check value by using the AES-GCM algorithm, or the source device calculates the check value and the ciphertext by using the AES-GCM algorithm.

In a possible implementation, the destination device determines, based on the value of the AE field, whether to decrypt the packet. For example, it is pre-specified that if the value of the AE field is 0x1, it indicates that decryption is required, or if the value of the AE field is 0x0, it indicates that decryption is required. In this case, if the destination device determines, based on the AE field, that decryption is not required, the destination device determines the check value based on the output of the AES-GCM, and verifies integrity of the packet based on the check value. If the destination device determines, based on the AE field, that decryption is required, the destination device determines the check value and plaintext based on the output of the AES-GCM.

In a possible implementation, if the destination device is a gateway, and the gateway is a gateway for layer 3 forwarding, the input parameter K of the AES-GCM is the first key, the first key is obtained by the destination device through calculation based on the pre-shared key PSK and the ID of the first VLAN, the input parameter IV of the AES-GCM is the value of the counter-related PN field, the input parameter A of the AES-GCM includes the header of the first VLAN, the ID of the first VLAN, the data that is encrypted, and an Internet protocol IP header of the packet, and an input parameter C of the AES-GCM is null. A second check value is obtained based on output of the AES-GCM. In this implementation, only integrity protection needs to be performed on the data. If the second check value obtained through calculation based on the AES-GCM is the same as a received first check value, the destination device determines that the packet is complete; or if the second check value is different from the received first check value, the destination device determines that the packet is incomplete. If the second check value is different from the first check value, the AES-GCM returns a failure (fail). In this case, even if the AE field is set to indicate that decryption is required, decryption is not required. When the second check value is the same as the first check value, integrity check succeeds. If the AE field is set to indicate that decryption is required, the packet is decrypted.

In a possible implementation, if the destination device is a gateway, and the gateway is a gateway for layer 2 forwarding, the input parameter K of the AES-GCM is the first key, the first key is obtained through calculation based on the pre-shared key PSK and the ID of the first VLAN, the input parameter IV of the AES-GCM is the value of the counter-related PN field, the input parameter A of the AES-GCM includes the header of the first VLAN, the ID of the first VLAN, the data that is encrypted, an Internet protocol IP header of the packet, the physical MAC address of the source device, and the MAC address of the destination device, and an input parameter C of the AES-GCM is null. A second check value is obtained based on output of the AES-GCM. In this implementation, only integrity protection needs to be performed on the data.

In a possible implementation, if the destination device is a gateway, and the gateway is a gateway for layer 3 forwarding, the input parameter K of the AES-GCM is the first key, the input parameter IV of the AES-GCM is the value of the counter-related PN field, the input parameter A of the AES-GCM includes the header of the first VLAN, the ID of the first VLAN, and an Internet protocol IP header of the packet, and an input parameter C of the AES-GCM is the ciphertext. Output of the AES-GCM includes the check value and the data that is decrypted. In this implementation, integrity protection and confidentiality protection need to be performed on the data.

In a possible implementation, if the destination device is a gateway, and the gateway is a gateway for layer 2 forwarding, the input parameter K of the AES-GCM is the first key, the input parameter IV of the AES-GCM is the value of the counter-related PN field, the input parameter A of the AES-GCM includes the header of the first VLAN, the ID of the first VLAN, the physical MAC address of the source device, and the MAC address of the destination device, and an input parameter C of the AES-GCM includes the ciphertext and an Internet protocol IP header of the packet. Output of the AES-GCM includes the check value and the data that is decrypted. In this implementation, integrity protection and confidentiality protection need to be performed on the data.

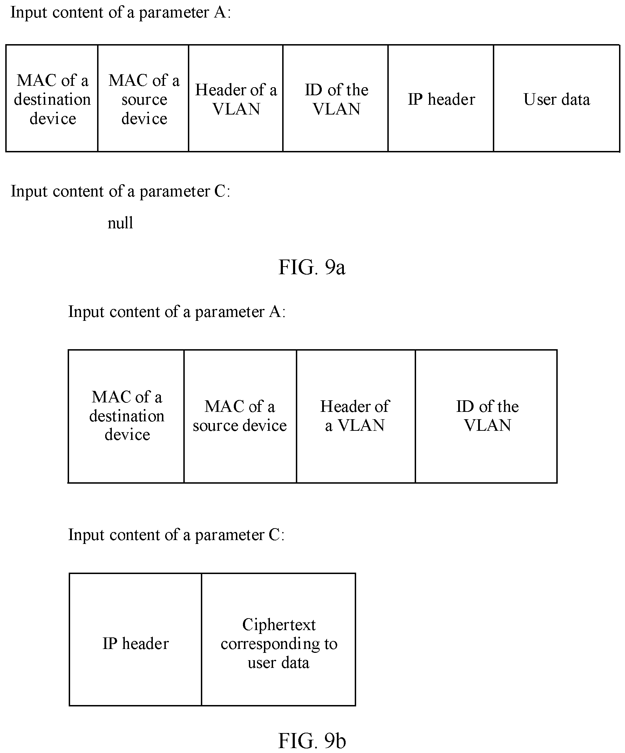

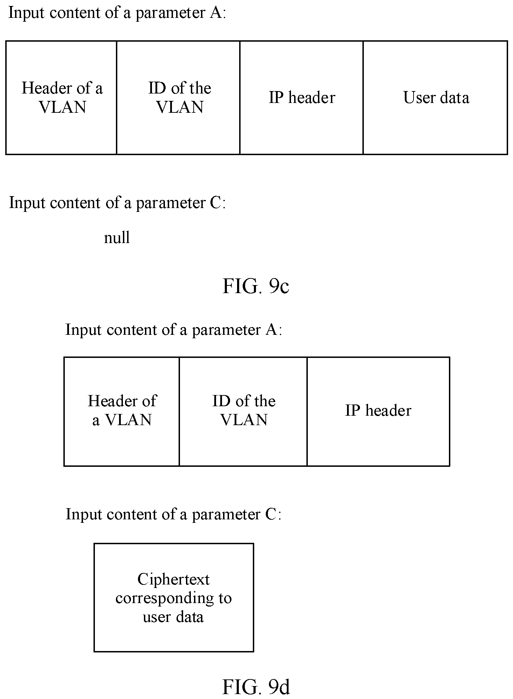

To more intuitively reflect different input parameters of the AES-GCM in different scenarios, the following shows, by using FIG. 9a to FIG. 9d, content included in the input parameters A and C of the AES-GCM when the destination device determines the check value and decryption according to the AES-GCM algorithm. FIG. 9a shows input content included in the parameter A and the parameter P when the gateway performs layer 2 forwarding and the destination device only performs integrity verification on the data and verifies whether the packet is a duplicate packet. FIG. 9b shows input content included in the parameter A and the parameter P when the gateway performs layer 2 forwarding and the destination device performs integrity verification on the data, verifies whether the packet is a duplicate packet, and performs decryption. FIG. 9c shows input content included in the parameter A and the parameter P when the gateway performs layer 3 forwarding and the destination device only performs integrity verification on the data and verifies whether the packet is a duplicate packet. FIG. 9d shows input content included in the parameter A and the parameter P when the gateway performs layer 3 forwarding and the destination device performs integrity verification on the data, verifies whether the packet is a duplicate packet, and performs decryption.

In a preferred implementation, in this application, an AES-GCM-128 algorithm may be used to output the check value and the ciphertext, or output the check value and plaintext. K may occupy 128 bits, IV occupies 94 bits, and T occupies 128 bits.

The method provided in this application is particularly applicable to security protection for communication between low-performance devices. In a preferred implementation, the solutions provided in this application are applicable to automotive Ethernet. The following describes the solutions provided in this application with reference to this scenario.

A vehicle described in this application may be an internal combustion engine vehicle that uses an engine as a power source, a hybrid vehicle that uses an engine and an electric motor as a power source, an electric vehicle that uses an electric motor as a power source, or the like.

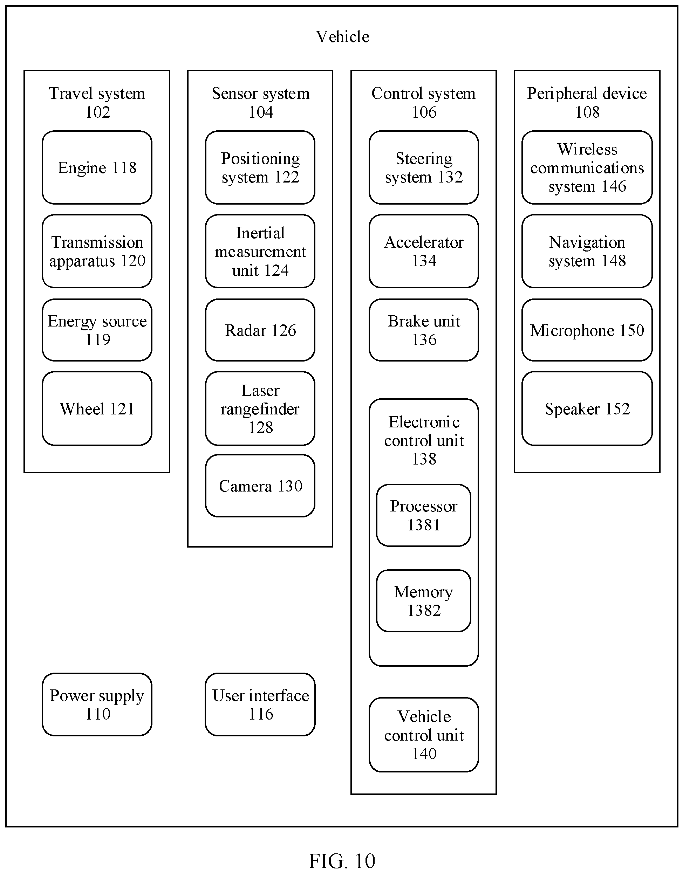

To facilitate understanding of this solution, a structure of the vehicle is first described in an embodiment of this application with reference to FIG. 10. FIG. 10 is a schematic diagram depicting the structure of the vehicle according to an embodiment of this application.

The vehicle may include various subsystems, such as a travel system 102, a sensor system 104, a control system 106, one or more peripheral devices 108, a power supply 110, and a user interface 116. Optionally, the vehicle may include more or fewer subsystems, and each subsystem may include a plurality of components. In addition, each subsystem and component of the vehicle may be interconnected in a wired or wireless manner (for example, Bluetooth).

The travel system 102 may include a component that provides power for the vehicle to move. In an embodiment, the travel system 102 may include an engine 118, an energy source 119, a transmission apparatus 120, and wheels 121.

The engine 118 may be an internal combustion engine, an electric motor, an air compression engine, or a combination of other types of engines, for example, a hybrid engine including a gasoline engine and an electric motor, or a hybrid engine including an internal combustion engine and an air compression engine. The engine 118 converts the energy source 119 into mechanical energy. Examples of the energy source 119 include gasoline, diesel, other oil-based fuels, propane, other compressed gas-based fuels, ethanol, solar panels, batteries, and other power sources. The energy source 119 may also provide energy for another system of the vehicle. The transmission apparatus 120 may transmit mechanical power from the engine 118 to the wheels 121. The transmission apparatus 120 may include a gearbox, a differential, and a drive shaft. In an embodiment, the transmission apparatus 120 may further include another component, for example, a clutch. The drive shaft may include one or more shafts that may be coupled to the wheels 121.

The sensor system 104 may include a plurality of sensors that sense location information of the vehicle. For example, the sensor system 104 may include a positioning system 122 (the positioning system may be a global positioning system GPS, a BeiDou system, or another positioning system), an inertial measurement unit (inertial measurement unit, IMU) 124, radar 126, a laser rangefinder 128, and a camera 130. The sensor system 104 may further include sensors (for example, an in-vehicle air quality monitor, a fuel gauge, and an oil temperature gauge) in an internal system of the monitored vehicle. Sensor data from one or more of these sensors can be used to detect an object and corresponding features (for example, a location, a shape, a direction, and a speed) of the object. Such detection and identification are key functions of security operations of an autonomous vehicle.

The positioning system 122 may be configured to estimate a geographical location of the vehicle, for example, longitude and latitude information of the vehicle. The IMU 124 is configured to sense a location and orientation change of the vehicle based on inertial acceleration. In an embodiment, the IMU 124 may be a combination of an accelerometer and a gyroscope. The radar 126 may sense an object in the ambient environment of the vehicle by using a radio signal, and may be specifically represented as millimeter-wave radar or laser radar. In some embodiments, in addition to sensing the object, the radar 126 may be further configured to sense a speed and/or a heading direction of the object. The laser rangefinder 128 may sense, by using a laser, an object in an environment in which the vehicle is located. In some embodiments, the laser rangefinder 128 may include one or more laser sources, a laser scanner, one or more detectors, and another system component. The camera 130 may be configured to capture a plurality of images of the ambient environment of the vehicle. The camera 130 may be a still camera or a video camera.

The control system 106 controls operations of the vehicle and the components of the vehicle. The control system 106 may include various components including a steering system 132, an accelerator 134, a brake unit 136, an electronic control unit (electronic control unit, ECU) 138, and a vehicle control unit (vehicle control unit, VCU) 140.

The steering system 132 may operate to adjust a heading direction of the vehicle. For example, in an embodiment, the steering system 132 may be a steering wheel system. The accelerator 134 is configured to control an operating speed of the engine 118 and further control a vehicle speed. The brake unit 136 is configured to control the vehicle to decelerate. The brake unit 136 may use friction to slow down the wheels 121. In another embodiment, the brake unit 136 may convert kinetic energy of the wheels 121 into a current. The brake unit 136 may alternatively use another form to reduce a rotational speed of the wheels 121, so as to control the vehicle speed. The electronic control unit 138 of the vehicle may be implemented as a single ECU or a plurality of ECUs on the vehicle. The single ECU or the plurality of ECUs is/are configured to communicate with the peripheral device 108 and the sensor system 104. The ECU 138 of the vehicle may include at least one processor 1381 and a memory (read-only memory, ROM) 1382. The at least one processor may be implemented or executed by using one or more general-purpose processors, a content addressable memory, a digital signal processor, an application-specific integrated circuit, a field programmable gate array, any suitable programmable logic device, a discrete gate or transistor logic, a discrete hardware component, or any combination designed to perform the functions described herein. In particular, the at least one processor may be implemented as one or more microprocessors, controllers, micro controller units (micro controller units, MCUs), or state machines. In addition, the at least one processor may be implemented as a combination of computing devices, such as a digital signal processor or microprocessor, a plurality of microprocessors, one or more microprocessors combined with a digital signal processor core, or any other combination of such configurations. The ROM may provide data storage, including storage of an address, a route, and a driving direction in this application.

The VCU 140 may provide information such as an engine status, a speed, a gear, and a steering wheel angle of the vehicle for the ECU 138.

The vehicle interacts with an external sensor, another vehicle, another computer system, or a user through the peripheral device 108. The peripheral device 108 may include a wireless communications system 146, a navigation system 148, a microphone 150, and/or a speaker 152. In some embodiments, the peripheral device 108 provides a means for the user of the vehicle to interact with the user interface 116. For example, the navigation system 148 may be implemented as a part of an in-vehicle entertainment system, an in-vehicle display system, an in-vehicle instrument cluster, or the like. In a practical embodiment, the navigation system 148 is implemented to include or cooperate with the sensor system 104. The sensor system 104 derives a current geographical location of the vehicle in real time or substantially in real time. The navigation system 148 is configured to provide navigation data for a driver of the vehicle. The navigation data may include location data of the vehicle, suggested route planned traveling indications, and visible map information for a vehicle operator. The navigation system 148 may present the location data to the driver of the vehicle through a display element or another presenting device. The current location of the vehicle may be described by using one or more of the following information: a triangulation location, a latitude/longitude location, x and y coordinates, or any other symbol or any measurement that indicates the geographical location of the vehicle.

The user interface 116 may further operate the navigation system 148 to receive user input. The navigation system 148 may be operated through a touchscreen. The navigation system 148 provides a route planning capability and a navigation capability when the user enters geographical location values of start and end points. In another case, the peripheral device 108 may provide a means for the vehicle to communicate with another device located in the vehicle. For example, the microphone 150 may receive audio (for example, a voice command or other audio input) from the user of the vehicle. Similarly, the speaker 152 may output audio to the user of the vehicle. The wireless communications system 146 may perform wireless communication with one or more devices directly or through a communications network. For example, the wireless communications system 146 may use 3G cellular communication such as code division multiple access (code division multiple access, CDMA), EVD0, or global system for mobile communications (global system for mobile communications, GSM)/general packet radio service (general packet radio service, GPRS), or 4G cellular communication such as long term evolution (long term evolution, LTE), or 5G cellular communication. The wireless communications system 146 may communicate with a wireless local area network (wireless local area network, WLAN) by using Wi-Fi. In some embodiments, the wireless communications system 146 may directly communicate with a device by using an infrared link, Bluetooth, or ZigBee. Other wireless protocols, for example, various vehicle communications systems, such as the wireless communications system 146, may include one or more dedicated short range communications (dedicated short range communications, DSRC) devices, and these devices may include public and/or private data communication between the vehicle and/or roadside stations.

The power supply 110 may supply power to various components of the vehicle. In an embodiment, the power supply 110 may be a rechargeable lithium-ion or lead-acid battery. One or more battery packs of such a battery may be configured as a power supply to supply power to the various components of the vehicle. In some embodiments, the power supply 110 and the energy source 119 may be implemented together, for example, in some pure electric vehicles.

Optionally, one or more of the foregoing components may be installed separately from or associated with the vehicle. For example, the memory 1382 may exist partially or entirely separate from the vehicle. The foregoing components may be communicatively coupled together in a wired and/or wireless manner.

Optionally, the foregoing components are merely examples. During actual application, components in the foregoing modules may be added or deleted according to an actual requirement. FIG. 10 should not be understood as a limitation on this embodiment of this application.

The vehicle may be a car, a truck, a motorcycle, a bus, a boat, a lawn mower, a recreational vehicle, a playground vehicle, a construction device, a trolley, a golf cart, or the like. This is not specifically limited in this embodiment of this application.

It should be noted that the vehicle provided in this application may alternatively be an autonomous driving vehicle.

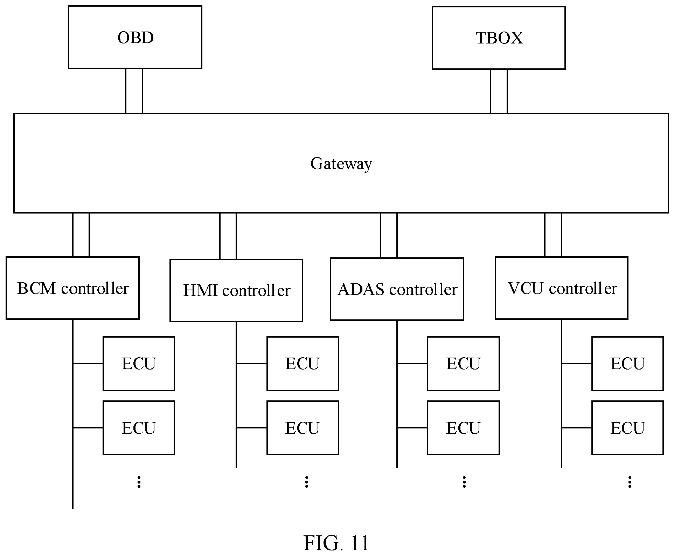

FIG. 10 describes a functional block diagram of the vehicle, and an automotive Ethernet system in the vehicle is described below. FIG. 11 is a schematic diagram depicting communication between devices in automotive Ethernet according to an embodiment of this application. FIG. 10 and FIG. 11 describe the vehicle from different perspectives. For example, an ECU of each component in a system in FIG. 11 may be considered as the electronic control unit 138 in FIG. 10.

As shown in FIG. 11, any ECU in FIG. 11 may be used as a source device in the embodiments of this application, and any ECU other than the selected source device may be used as a destination device in the embodiments of this application. A gateway in FIG. 11 may be used as a source device in the embodiments of this application in some scenarios, or may be used as a destination device in the embodiments of this application in some other scenarios. The solutions provided in this application may be applied to a device with an automotive Ethernet connection. For example, the device includes but is not limited to a body control module (body control module, BCM), a human machine interface (human machine interface, HMI) system, an advanced driver assistance system (advanced driver assistance system, ADAS) sensing system, a VCU, an on-board diagnostic system (on-board diagnostic system, OBD), a telematics box (telematics box, TBOX), and the gateway shown in FIG. 11.

The device provided in this application may be a device connected to the automotive Ethernet, or may be a low-performance device in another scenario, for example, may be a device connected to the Internet of things. Based on the embodiments corresponding to FIG. 2 to FIG. 7A and FIG. 7B, to better implement the foregoing solutions in the embodiments of this application, the following further provides related devices configured to implement the foregoing solutions.

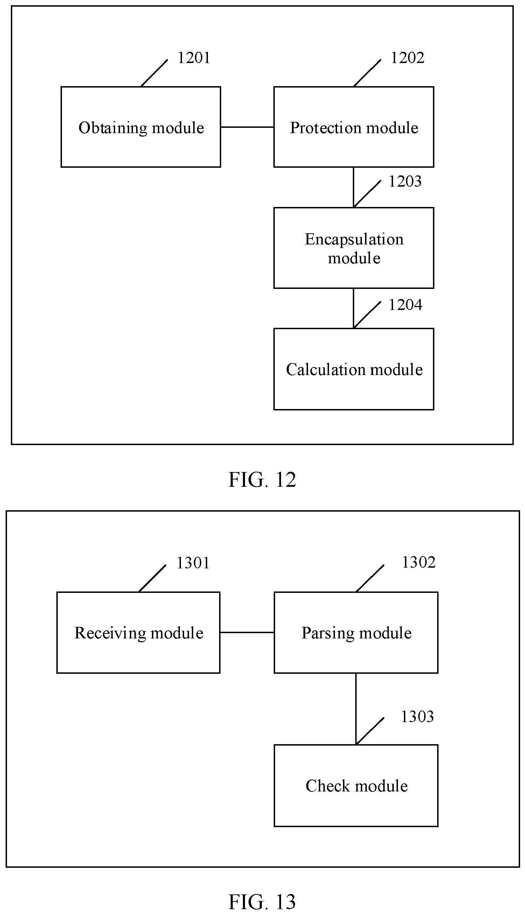

FIG. 12 is a schematic diagram depicting a structure of a security protection apparatus according to an embodiment of this application. The security protection apparatus is a source device. The security protection apparatus provided in this application may include: an obtaining module 1201, configured to obtain a security level of a first virtual local area network VLAN, where the source device and a destination device corresponding to the source device are devices in the first VLAN, the first VLAN is one of a plurality of VLANs that may be included in Ethernet, and each of the plurality of VLANs corresponds to one security level; and a protection module 1202, configured to determine, based on the security level of the first VLAN, whether to perform security protection on data to be sent to the destination device.

In a possible implementation, the apparatus may further include: an encapsulation module 1203, configured to encapsulate a first packet based on a header of the first VLAN, to obtain a second packet, where the header of the first VLAN may include a first field, a counter-related PN field, and a decryption type-related AE field, the first field is used to indicate the destination device to perform security verification on received data, the PN field is used by the destination device to verify whether the received data is replayed data, the AE field is used by the destination device to determine whether to decrypt the data, and the first packet is a packet obtained after the source device encapsulates the data based on an identifier ID of the first VLAN.

In a possible implementation, the protection module 1202 is specifically configured to determine, based on the security level of the first VLAN, to perform integrity protection on the data. The apparatus may further include a calculation module 1204, configured to determine a check value based on the identifier ID of the first VLAN, the data, and the header of the first VLAN, where the check value is used to verify integrity of the data.

In a possible implementation, the check value is obtained based on output of an Advanced Encryption Standard Galois/Counter Mode AES-GCM, an input parameter K of the AES-GCM is a first key, the first key is obtained through calculation based on a pre-shared key PSK and the ID of the first VLAN, an input parameter IV of the AES-GCM is a value of the counter-related PN field, an input parameter A of the AES-GCM may include the header of the first VLAN, the ID of the first VLAN, the data, and an Internet protocol IP header of the data, and an input parameter P of the AES-GCM is null.

In a possible implementation, the check value is obtained based on output of an Advanced Encryption Standard Galois/Counter Mode AES-GCM, an input parameter K of the AES-GCM is a first key, the first key is obtained through calculation based on a pre-shared key PSK and the ID of the first VLAN, an input parameter IV of the AES-GCM is a value of the counter-related PN field, an input parameter A of the AES-GCM may include the header of the first VLAN, the ID of the first VLAN, the data, an Internet protocol IP header of the data, a physical MAC address of the source device, and a MAC address of the destination device, and an input parameter P of the AES-GCM is null.

In a possible implementation, the protection module 1202 is further configured to determine, based on the security level of the first VLAN, to perform confidentiality protection on the data. The calculation module 1204 is further configured to calculate a first key based on a pre-shared key PSK and the identifier ID of the first VLAN. The source device performs encryption calculation on the data based on the first key, to obtain the data that is encrypted.

In a possible implementation, the encrypted data is obtained based on output of an Advanced Encryption Standard Galois/Counter Mode AES-GCM, an input parameter K of the AES-GCM is the first key, an input parameter IV of the AES-GCM is a value of the counter-related PN field, an input parameter A of the AES-GCM may include the header of the first VLAN, the ID of the first VLAN, and an Internet protocol IP header of the data, and an input parameter P of the AES-GCM is the data.

In a possible implementation, the encrypted data is obtained based on output of an Advanced Encryption Standard Galois/Counter Mode AES-GCM, an input parameter K of the AES-GCM is the first key, an input parameter IV of the AES-GCM is a value of the counter-related PN field, an input parameter A of the AES-GCM may include the header of the first VLAN, the ID of the first VLAN, a physical MAC address of the source device, and a MAC address of the destination device, and an input parameter P of the AES-GCM may include the data and an Internet protocol IP header of the data.

In a possible implementation, the protection module 1202 is further configured to determine, by the source device based on the security level of the first VLAN, to perform anti-replay protection on the data. The source device adds 1 to a value of the counter-related PN field each time the source device sends data to the destination device, so that the destination device verifies, based on the PN field, whether the data is replayed data.

In a possible implementation, the protection module 1202 is further configured to determine, based on the security level of the first VLAN, not to perform security protection on the data.

In a possible implementation, the Ethernet is automotive Ethernet, and the source device and the destination device each are an electronic control unit ECU or a gateway.

FIG. 13 is a schematic diagram depicting a structure of a security protection apparatus according to an embodiment of this application. The security protection apparatus is a destination device. The apparatus may include: a receiving module 1301, configured to receive a packet sent by a source device, where the packet is a packet obtained after the source device encapsulates a first packet based on a header of a first VLAN, and the first packet is a packet obtained after the source device encapsulates, based on an identifier ID of the first VLAN, data to be sent to the destination device; and a parsing module 1302, configured to determine, based on a first field that may be included in the header of the first VLAN, whether to perform security verification on the packet.

In a possible implementation, the packet may include a first check value, the first check value is a check value determined by the source device based on the identifier ID of the first VLAN, the data, and the header of the first VLAN, and when the destination device determines to perform security verification on the packet, the apparatus may further include: a check module 1303, configured to: determine a second check value based on the identifier ID of the first VLAN, the data, and the header of the first VLAN; and verify integrity of the data by comparing the second check value with the first check value.

In a possible implementation, the second check value is obtained based on output of an Advanced Encryption Standard Galois/Counter Mode AES-GCM, an input parameter K of the AES-GCM is a first key, the first key is obtained by the destination device through calculation based on a pre-shared key PSK and the ID of the first VLAN, an input parameter IV of the AES-GCM is a value of a counter-related PN field, an input parameter A of the AES-GCM may include the header of the first VLAN, the ID of the first VLAN, the data that is encrypted, and an Internet protocol IP header of the packet, and an input parameter C of the AES-GCM is null.

In a possible implementation, the second check value is obtained based on output of an Advanced Encryption Standard Galois/Counter Mode AES-GCM, an input parameter K of the AES-GCM is a first key, the first key is obtained through calculation based on a pre-shared key PSK and the ID of the first VLAN, an input parameter IV of the AES-GCM is a value of a counter-related PN field, an input parameter A of the AES-GCM may include the header of the first VLAN, the ID of the first VLAN, the data that is encrypted, an Internet protocol IP header of the packet, a physical MAC address of the source device, and a MAC address of the destination device, and an input parameter C of the AES-GCM is null.

In a possible implementation, the check module 1303 is further configured to: determine, based on a decryption type-related AE field that may be included in the packet, whether to decrypt the data; and when determining, based on the AE field, to decrypt the data, perform decryption calculation on the data based on a first key, to obtain the data that is decrypted, where the first key is a key obtained by the destination device through calculation based on a pre-shared key PSK and the identifier ID of the first VLAN.

In a possible implementation, the decrypted data is obtained based on output of an Advanced Encryption Standard Galois/Counter Mode AES-GCM, an input parameter K of the AES-GCM is the first key, an input parameter IV of the AES-GCM is a value of a counter-related PN field, an input parameter A of the AES-GCM may include the header of the first VLAN, the ID of the first VLAN, and an Internet protocol IP header of the packet, and an input parameter C of the AES-GCM is the data that is encrypted.

In a possible implementation, the decrypted data is obtained based on output of an Advanced Encryption Standard Galois/Counter Mode AES-GCM, an input parameter K of the AES-GCM is the first key, an input parameter IV of the AES-GCM is a value of a counter-related PN field, an input parameter A of the AES-GCM may include the header of the first VLAN, the ID of the first VLAN, a physical MAC address of the source device, and a MAC address of the destination device, and an input parameter C of the AES-GCM may include the data that is encrypted and an Internet protocol IP header of the packet.

In a possible implementation, when the destination device determines, based on the first field that may be included in the header of the first VLAN, to perform security verification on the packet, the check module 1303 is further configured to verify, based on a PN field that may be included in the header of the first VLAN, whether the received data is replayed data. The destination device stores a value of the PN field if the data is non-replayed data.

In a possible implementation, the check module 1303 may be further configured to parse the packet, and determine, based on the first field that may be included in the header of the first VLAN, not to perform security verification on the packet.

In a possible implementation, the source device and the destination device each are an electronic control unit ECU or a gateway in automotive Ethernet.

It should be noted that content such as information exchange and an execution process between the modules/units in the security protection apparatus is based on a same concept as the method embodiments corresponding to FIG. 2 to FIG. 7A and FIG. 7B in this application. For specific content, refer to the descriptions in the foregoing method embodiments in this application. Details are not described herein again.

In addition, it should be noted that a name of a module is not limited in the embodiments of this application.

The security protection apparatus may be specifically an ECU.

It should be noted that, for a specific implementation and beneficial effects of performing the security protection method by the security protection apparatus or the ECU, refer to the descriptions in the method embodiments corresponding to FIG. 2 to FIG. 7A and FIG. 7B. Details are not described herein again.

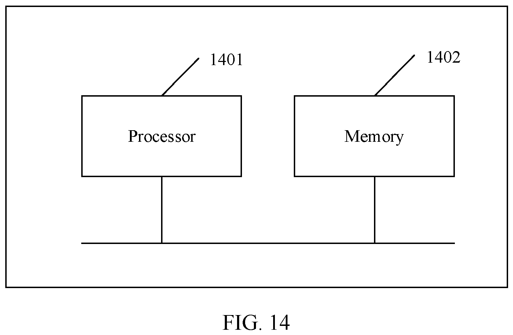

An embodiment of this application further provides an ECU, a vehicle, or an electronic device. FIG. 14 shows a security protection apparatus according to an embodiment of this application. The security protection apparatus may be an ECU, a vehicle, or an electronic device. The security protection apparatus includes a processor 1401. The processor 1401 is coupled to a memory 1402. The memory 1402 stores program instructions. When the program instructions stored in the memory 1402 are executed by the processor 1401, the methods described in FIG. 2 to FIG. 7A and FIG. 7B are performed.

An embodiment of this application further provides a computer-readable storage medium. The computer-readable storage medium stores a program used for security protection. When the program is run on a computer, the computer is enabled to perform the steps performed by the source device and the destination device in the methods described in the embodiments shown in FIG. 2 to FIG. 7A and FIG. 7B.

An embodiment of this application further provides a computer program product. When the computer program product runs on a computer, the computer is enabled to perform the steps performed by the source device and the destination device in the methods described in the embodiments shown in FIG. 2 to FIG. 7A and FIG. 7B.

The computer program product includes one or more computer instructions. When the computer program instructions are loaded and executed on a computer, the procedures or the functions according to the embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

An embodiment of this application further provides a circuit system. The circuit system includes a processing circuit and a storage circuit. The processing circuit and the storage circuit are configured to perform the steps performed by the source device and the destination device in the methods described in the embodiments shown in FIG. 2 to FIG. 7A and FIG. 7B. The processing circuit may be any suitable type of computing unit, for example, a microprocessor, a digital signal processor (digital signal processor, DSP), a field programmable gate array (field programmable gate array, FPGA), an application-specific integrated circuit (application-specific integrated circuit, ASIC), or any other form of circuit. The storage circuit may be volatile (volatile) and/or non-volatile (non-volatile). For example, the storage circuit may be a register, a cache, or the like. Specifically, a volatile storage circuit may include a cache memory, and a non-volatile storage circuit may include a flash memory.

The security protection apparatus or the ECU provided in the embodiments of this application may be specifically a chip. The chip includes a processing unit and a communications unit. The processing unit may be, for example, a processor, and the communications unit may be, for example, an input/output interface, a pin, or a circuit. The processing unit may execute computer-executable instructions stored in a storage unit, so that the chip in a server performs the security protection apparatuses described in the embodiments shown in FIG. 2 to FIG. 7A and FIG. 7B. Optionally, the storage unit is a storage unit in the chip, for example, a register or a cache, or the storage unit may be a storage unit that is at a radio access device end and that is located outside the chip, for example, a read-only memory (read-only memory, ROM), another type of static storage device that can store static information and instructions, or a random access memory (random access memory, RAM).

In addition, it should be noted that the described apparatus embodiments are merely examples. The units described as separate parts may or may not be physically separate, and parts displayed as units may or may not be physical units, may be located in one position, or may be distributed on a plurality of network units. Some or all of the modules may be selected based on an actual requirement to achieve the objectives of the solutions of the embodiments. In addition, in the accompanying drawings of the apparatus embodiments provided in this application, a connection relationship between modules indicates that there is a communication connection between the modules, and the communication connection may be specifically implemented as one or more communications buses or signal cables.

According to the descriptions of the foregoing implementations, a person skilled in the art may clearly understand that this application may be implemented by software in addition to necessary universal hardware, or by dedicated hardware, including an application-specific integrated circuit, a dedicated CLU, a dedicated memory, a dedicated component, and the like. Usually, any functions that are implemented by using a computer program can be easily implemented by using corresponding hardware. Moreover, specific hardware structures used to implement a same function may be of various forms, for example, in a form of an analog circuit, a digital circuit, a dedicated circuit, or the like. However, for this application, a software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a server, a network device, or the like) to perform the methods described in the embodiments of this application.

## Claims

1. A security protection method, comprising:
obtaining, by a source device, a security level of a first virtual local area network VLAN, wherein the source device and a destination device corresponding to the source device are devices in the first VLAN, the first VLAN is one of a plurality of VLANs comprised in an Ethernet, each of the plurality of VLANs corresponds to one security level, and the security level of each of the plurality of VLANs is preset; and
(202) determining, by the source device using the security level of the first VLAN, whether to perform security protection on data to be sent to the destination device;
**characterized in that**
when the source device determines (202), using the security level of the first VLAN, to perform security protection on the data to be sent to the destination device, the method further comprises:
(302) encapsulating, by the source device, a first packet using a header of the first VLAN, to obtain a second packet, wherein the header of the first VLAN comprises a first field, a counter-related PN field, and a decryption type-related AE field, the first field is used to indicate the destination device to perform security verification on the data sent to the destination device, the PN field is used by the destination device to verify whether the data sent to the destination device is replayed data, the AE field is used by the destination device to determine whether to decrypt the data sent to the destination device, and wherein the first packet is a packet obtained after the source device encapsulates, using an identifier ID of the first VLAN, the data to be sent to the destination device.

2. The method according to claim 1, wherein the determining (202), by the source device using the security level of the first VLAN, whether to perform security protection on data to be sent to the destination device comprises:
(502) determining, by the source device using the security level of the first VLAN, to perform integrity protection on the data; and
the method further comprises:
(503) determining, by the source device, a check value using the identifier ID of the first VLAN, the data, and the header of the first VLAN, wherein the check value is used to verify integrity of the data.

3. The method according to claim 2, wherein the determining (202), by the source device using the security level of the first VLAN, whether to perform security protection on data to be sent to the destination device further comprises:
(602) determining, by the source device using the security level of the first VLAN, to perform confidentiality protection on the data; and
the method further comprises:
(603) calculating, by the source device, a first key using a pre-shared key PSK and the identifier ID of the first VLAN; and
(604) performing, by the source device, encryption calculation on the data using the first key, to obtain the data that is encrypted.

4. The method according to any one of claims 1 to 3, wherein the (202) determining, by the source device using the security level of the first VLAN, whether to perform security protection on data to be sent to the destination device further comprises:
(504) determining, by the source device using the security level of the first VLAN, to perform anti-replay protection on the data; and
(505) adding 1 to a value of the counter-related PN field each time the source device sends data to the destination device, so that the destination device verifies, using the PN field, whether the data is replayed data.

5. The method according to claim 1, wherein the determining, by the source device using the security level of the first VLAN, whether to perform security protection on data to be sent to the destination device comprises:
determining, by the source device using the security level of the first VLAN, not to perform security protection on the data.

6. A security protection method, comprising:
(506, 605) receiving, by a destination device, a second packet sent by a source device, wherein the second packet comprises a first packet encapsulated with a header of a first VLAN, and the first packet comprises an identifier ID of the first VLAN, and data to be sent to the destination device,
**characterized in that**
the header of the first VLAN comprises a first field, a counter-related PN field, and a decryption type-related AE field, the first field is used to indicate the destination device to perform security verification on the data sent to the destination device, the PN field is used by the destination device to verify whether the data sent to the destination device is replayed data, the AE field is used by the destination device to determine whether to decrypt the data sent to the destination device; and
(507, 606) parsing, by the destination device, the second packet, and determining, using the first field comprised in the header of the first VLAN, whether to perform security verification on the second packet.

7. The method according to claim 6, wherein the second packet comprises a first check value, the first check value is a check value determined by the source device using the identifier ID of the first VLAN, the data, and the header of the first VLAN, and when the destination device determines to perform security verification on the second packet, the method further comprises:
determining, by the destination device, a second check value using the identifier ID of the first VLAN, the data, and the header of the first VLAN; and
verifying, by the destination device, integrity of the data by comparing the second check value with the first check value.

8. The method according to claim 6, wherein when the destination device determines to perform security verification on the second packet, the method further comprises:
(607) determining, by the destination device using the decryption type-related AE field comprised in the second packet, whether to decrypt the data; and
when the destination device determines, using the AE field, to decrypt the data, the method further comprises:
(608) performing, by the destination device, decryption calculation on the data using a first key, to obtain the data that is decrypted, wherein the first key is a key obtained by the destination device through calculation using a pre-shared key PSK and the identifier ID of the first VLAN.

9. The method according to claim 6, wherein when the destination device determines, using the first field comprised in the header of the first VLAN, to perform security verification on the second packet, the method further comprises:
(710) verifying, by the destination device using the PN field comprised in the header of the first VLAN, whether the received data is replayed data; and
storing, by the destination device, a value of the PN field if the data is non-replayed data.

10. The method according to claim 6 or 7, wherein the parsing, by the destination device, the second packet, and determining, using a first field comprised in the header of the first VLAN, whether to perform security verification on the second packet comprises:
parsing, by the destination device, the second packet, and determining, using the first field comprised in the header of the first VLAN, not to perform security verification on the second packet.

11. A security protection apparatus, wherein the security protection apparatus is a source device and comprises:
an obtaining module, configured to obtain a security level of a first virtual local area network, VLAN, wherein the source device and a destination device corresponding to the source device are devices in the first VLAN, the first VLAN is one of a plurality of VLANs comprised in an Ethernet, each of the plurality of VLANs corresponds to one security level, and the security level of each of the plurality of VLANs is preset; and
a protection module, configured to determine, using the security level that is of the first VLAN and that is obtained by the obtaining module, whether to perform security protection on data to be sent to the destination device;
**characterized in that**
the source device further comprises an encapsulation module, configured to:
encapsulate a first packet using a header of the first VLAN, to obtain a second packet, wherein the header of the first VLAN comprises a first field, a counter-related PN field, and a decryption type-related AE field, the first field is used to indicate the destination device to perform security verification on the data, the PN field is used by the destination device to verify whether the data is replayed data, the AE field is used by the destination device to determine whether to decrypt the data, and the first packet is a packet obtained after the source device encapsulates the data using an identifier ID of the first VLAN.

12. A security protection apparatus, wherein the security protection apparatus is a destination device and comprises:
a receiving module, configured to receive a second packet sent by a source device, wherein the second packet comprises a first packet encapsulated with a header of a first VLAN, and the first packet comprises an identifier ID of the first VLAN, and data to be sent to the destination device;
**characterized in that**
the header of the first VLAN comprises a first field, a counter-related PN field, and a decryption type-related AE field, the first field is used to indicate the destination device to perform security verification on the data sent to the destination device, the PN field is used by the destination device to verify whether the data sent to the destination device is replayed data, the AE field is used by the destination device to determine whether to decrypt the data sent to the destination device; and
a parsing module, configured to: parse the second packet, and determine, based on a first field comprised in the header of the first VLAN, whether to perform security verification on the second packet.

13. The security protection apparatus according to claim 12, wherein the second packet comprises a first check value, the first check value is a check value determined by the source device using the identifier ID of the first VLAN, the data, and the header of the first VLAN, and when the destination device determines to perform security verification on the second packet, the destination device further comprises a check module, wherein the check module is configured to:
determine a second check value based on the identifier ID of the first VLAN, the data, and the header of the first VLAN; and
verify integrity of the data by comparing the second check value with the first check value.

14. A computer-readable storage medium, comprising a program, wherein when the program is run on a computer, the computer is enabled to perform the method according to any one of claims 1 to 10.

15. An intelligent vehicle, wherein the intelligent vehicle comprises a processing circuit and a storage circuit, and the processing circuit and the storage circuit are configured to perform the method according to any one of claims 1 to 10.

## Patentansprüche

1. Sicherheitsschutzverfahren, umfassend:
Erlangen, durch eine Quellvorrichtung, einer Sicherheitsstufe eines ersten virtuellen lokalen Netzwerks, VLAN, wobei die Quellvorrichtung und eine Zielvorrichtung, die der Quellvorrichtung entspricht, Vorrichtungen in dem ersten VLAN sind, das erste VLAN eines einer Vielzahl VLANs ist, die in einem Ethernet umfasst sind, jedes der Vielzahl VLANs einer Sicherheitsstufe entspricht und die Sicherheitsstufe jedes der Vielzahl VLANs voreingestellt ist; und
(202) Bestimmen, durch die Quellvorrichtung unter Verwendung der Sicherheitsstufe des ersten VLANs, ob ein Sicherheitsschutz an Daten, die an die Zielvorrichtung zu senden sind, durchzuführen ist;
**dadurch gekennzeichnet, dass**
wenn die Quellvorrichtung unter Verwendung der Sicherheitsstufe des ersten VLAN bestimmt (202), einen Sicherheitsschutz an den Daten, die an die Zielvorrichtung zu senden sind, durchzuführen, das Verfahren ferner Folgendes umfasst:
(302) Verkapseln, durch die Quellvorrichtung, eines ersten Pakets unter Verwendung eines Headers des ersten VLAN, um ein zweites Paket zu erlangen, wobei der Header des ersten VLAN ein erstes Feld, ein zählerbezogenes PN-Feld und ein entschlüsselungstypbezogenes AE-Feld umfasst, wobei das erste Feld verwendet wird, um der Zielvorrichtung anzugeben, eine Sicherheitsverifizierung an den Daten, die an die Zielvorrichtung gesendet werden, durchzuführen, wobei das PN-Feld durch die Zielvorrichtung verwendet wird, um zu verifizieren, ob die Daten, die an die Zielvorrichtung gesendet werden, wiedergegebene Daten sind, wobei das AE-Feld durch die Zielvorrichtung verwendet wird, um zu bestimmen, ob die Daten, die an die Zielvorrichtung gesendet werden, zu entschlüsseln sind, und wobei das erste Paket ein Paket ist, das erlangt wurde, nachdem die Quellvorrichtung die Daten, die an die Zielvorrichtung zu senden sind, unter Verwendung einer Kennungs-ID des ersten VLAN verkapselt hat.

2. Verfahren nach Anspruch 1, wobei das Bestimmen (202), durch die Quellvorrichtung unter Verwendung der Sicherheitsstufe des ersten VLAN, ob ein Sicherheitsschutz an Daten, die an die Zielvorrichtung zu senden sind, durchzuführen ist, Folgendes umfasst:
(502) Bestimmen, durch die Quellvorrichtung unter Verwendung der Sicherheitsstufe des ersten VLAN, einen Integritätsschutz an den Daten durchzuführen; und
wobei das Verfahren ferner Folgendes umfasst:
(503) Bestimmen, durch die Quellvorrichtung, eines Prüfwerts unter Verwendung der Kennungs-ID des ersten VLAN, der Daten und des Headers des ersten VLAN, wobei der Prüfwert verwendet wird, um die Integrität der Daten zu verifizieren.

3. Verfahren nach Anspruch 2, wobei das Bestimmen (202), durch die Quellvorrichtung unter Verwendung der Sicherheitsstufe des ersten VLAN, ob ein Sicherheitsschutz an Daten, die an die Zielvorrichtung zu senden sind, durchzuführen ist, Folgendes umfasst:
(602) Bestimmen, durch die Quellvorrichtung unter Verwendung der Sicherheitsstufe des ersten VLAN, einen Vertraulichkeitsschutz an den Daten durchzuführen; und
wobei das Verfahren ferner Folgendes umfasst:
(603) Berechnen, durch die Quellvorrichtung, eines ersten Schlüssels unter Verwendung eines vorab geteilten Schlüssels, PSK, und der Kennungs-ID des ersten VLAN; und
(604) Durchführen, durch die Quellvorrichtung, einer Verschlüsselungsberechnung an den Daten unter Verwendung des ersten Schlüssels, um die Daten, die verschlüsselt sind, zu erlangen.

4. Verfahren nach einem der Ansprüche 1 bis 3, wobei das Bestimmen (202), durch die Quellvorrichtung unter Verwendung der Sicherheitsstufe des ersten VLAN, ob ein Sicherheitsschutz an Daten, die an die Zielvorrichtung zu senden sind, durchzuführen ist, Folgendes umfasst:
(504) Bestimmen, durch die Quellvorrichtung unter Verwendung der Sicherheitsstufe des ersten VLAN, einen Anti-Wiedergabeschutz an den Daten durchzuführen; und
(505) Hinzufügen von 1 zu einem Wert des zählerbezogenen PN-Felds jedes Mal, wenn die Quellvorrichtung Daten an die Zielvorrichtung sendet, so dass die Zielvorrichtung anhand des PN-Felds verifiziert, ob es sich bei den Daten um wiedergegebene Daten handelt.

5. Verfahren nach Anspruch 1, wobei das Bestimmen, durch die Quellvorrichtung unter Verwendung der Sicherheitsstufe des ersten VLAN, ob ein Sicherheitsschutz an Daten, die an die Zielvorrichtung zu senden sind, durchzuführen ist, Folgendes umfasst:
Bestimmen, durch die Quellvorrichtung unter Verwendung der Sicherheitsstufe des ersten VLAN, keinen Sicherheitsschutz an den Daten durchzuführen.

6. Sicherheitsschutzverfahren, umfassend:
(506, 605) Empfangen, durch eine Zielvorrichtung, eines zweiten Pakets, das durch eine Quellvorrichtung gesendet wird, wobei das zweite Paket ein erstes Paket umfasst, das mit einem Header eines ersten VLAN verkapselt ist, und wobei das erste Paket eine Kennungs-ID des ersten VLANs und Daten, die an die Zielvorrichtung zu senden sind, umfasst,
**dadurch gekennzeichnet, dass**
der Header des ersten VLAN ein erstes Feld, ein zählerbezogenes PN-Feld und ein entschlüsselungstypbezogenes AE-Feld umfasst,
wobei das erste Feld verwendet wird, um der Zielvorrichtung anzugeben, eine Sicherheitsverifizierung an den Daten, die an die Zielvorrichtung gesendet werden, durchzuführen, wobei das PN-Feld durch die Zielvorrichtung verwendet wird, um zu verifizieren, ob die Daten, die an die Zielvorrichtung gesendet werden, wiedergegebene Daten sind, wobei das AE-Feld durch die Zielvorrichtung verwendet wird, um zu bestimmen, ob die Daten, die an die Zielvorrichtung gesendet werden, zu entschlüsseln sind; und
(507, 606) Parsen, durch die Zielvorrichtung, des zweiten Pakets und Bestimmen, unter Verwendung des ersten Felds, das in dem Header des ersten VLAN umfasst ist, ob eine Sicherheitsverifizierung des zweiten Pakets durchzuführen ist.

7. Verfahren nach Anspruch 6, wobei das zweite Paket einen ersten Prüfwert umfasst, wobei der erste Prüfwert ein Prüfwert ist, der von der Quellvorrichtung unter Verwendung der Kennungs-ID des ersten VLAN, der Daten und des Headers des ersten VLAN bestimmt wird, und, wenn die Zielvorrichtung bestimmt, eine Sicherheitsverifizierung an dem zweiten Paket durchzuführen, das Verfahren ferner Folgendes umfasst:
Bestimmen, durch die Zielvorrichtung, eines zweiten Prüfwerts unter Verwendung der Kennungs-ID des ersten VLAN, der Daten und des Headers des ersten VLAN; und
Verifizieren, durch die Zielvorrichtung, der Integrität der Daten durch Vergleichen des zweiten Prüfwerts mit dem ersten Prüfwert.

8. Verfahren nach Anspruch 6, wobei, wenn die Zielvorrichtung bestimmt, eine Sicherheitsverifizierung an dem zweiten Paket durchzuführen, das Verfahren ferner Folgendes umfasst:
(607) Bestimmen, durch die Zielvorrichtung unter Verwendung des entschlüsselungstypbezogenen AE-Felds, das in dem zweiten Paket umfasst ist, ob die Daten zu entschlüsseln sind; und
wenn die Zielvorrichtung unter Verwendung des AE-Felds bestimmt, die Daten zu entschlüsseln, das Verfahren ferner Folgendes umfasst:
(608) Durchführen, durch die Zielvorrichtung, einer Entschlüsselungsberechnung an den Daten unter Verwendung eines ersten Schlüssels, um Daten, die entschlüsselt sind, zu erlangen, wobei der erste Schlüssel ein Schlüssel ist, der durch die Zielvorrichtung durch Berechnung unter Verwendung eines vorab geteilten Schlüssels, PSK, und der Kennungs-ID des ersten VLAN erlangt wird.

9. Verfahren nach Anspruch 6, wobei, wenn die Zielvorrichtung unter Verwendung des ersten Felds, das in dem Header des ersten VLAN umfasst ist, bestimmt, eine Sicherheitsverifizierung an dem zweiten Paket durchzuführen, das Verfahren ferner Folgendes umfasst:
(710) Verifizieren, durch die Zielvorrichtung unter Verwendung des PN-Felds, das in dem Header des ersten VLAN umfasst ist, ob die empfangenen Daten wiedergegebene Daten sind; und
Speichern, durch die Zielvorrichtung, eines Werts des PN-Feldes, wenn die Daten keine wiedergegebenen Daten sind.

10. Verfahren nach Anspruch 6 oder 7, wobei das Parsen, durch die Zielvorrichtung, des zweiten Pakets und Bestimmen, unter Verwendung eines ersten Felds, das in dem Header des ersten VLAN umfasst ist, ob eine Sicherheitsverifizierung des zweiten Pakets durchzuführen ist, Folgendes umfasst:
Parsen, durch die Zielvorrichtung, des zweiten Pakets und Bestimmen, unter Verwendung des ersten Felds, das in dem Header des ersten VLAN umfasst ist, keine Sicherheitsverifizierung an dem zweiten Paket durchzuführen.

11. Sicherheitsschutzeinrichtung, wobei die Sicherheitsschutzeinrichtung eine Quellvorrichtung ist und Folgendes umfasst:
ein Erlangungsmodul, das dazu konfiguriert ist, eine Sicherheitsstufe eines ersten virtuellen lokalen Netzwerks, VLAN, zu erlangen, wobei die Quellvorrichtung und eine Zielvorrichtung, die der Quellvorrichtung entspricht, Vorrichtungen in dem ersten VLAN sind, das erste VLAN eines einer Vielzahl VLANs ist, die in einem Ethernet umfasst sind, jedes der Vielzahl VLANs einer Sicherheitsstufe entspricht und die Sicherheitsstufe jedes der Vielzahl VLANs voreingestellt ist; und
ein Schutzmodul, das dazu konfiguriert ist, unter Verwendung der Sicherheitsstufe, die zu dem ersten VLAN gehört und die von dem Erlangungsmodul erlangt wird, zu bestimmen, ob ein Sicherheitsschutz an den Daten, die an die Zielvorrichtung zu senden sind, durchzuführen ist;
**dadurch gekennzeichnet, dass**
die Quellvorrichtung ferner ein Verkapselungsmodul umfasst, das zu Folgendem konfiguriert ist:
Verkapseln eines ersten Pakets unter Verwendung eines Headers des ersten VLAN, um ein zweites Paket zu erlangen, wobei der Header des ersten VLAN ein erstes Feld, ein zählerbezogenes PN-Feld und ein entschlüsselungstypbezogenes AE-Feld umfasst, wobei das erste Feld verwendet wird, um der Zielvorrichtung anzugeben, eine Sicherheitsverifizierung an den Daten durchzuführen, wobei das PN-Feld durch die Zielvorrichtung verwendet wird, um zu verifizieren, ob die Daten wiedergegebene Daten sind, wobei das AE-Feld durch die Zielvorrichtung verwendet wird, um zu bestimmen, ob die Daten zu entschlüsseln sind, und wobei es sich bei dem ersten Paket um ein Paket handelt, das erlangt wurde, nachdem die Quellvorrichtung die Daten unter Verwendung einer Kennungs-ID des ersten VLAN verkapselt hat.

12. Sicherheitsschutzeinrichtung, wobei die Sicherheitsschutzeinrichtung eine Zielvorrichtung ist und Folgendes umfasst:
ein Empfangsmodul, das dazu konfiguriert ist, ein zweites Paket, das durch eine Quellvorrichtung gesendet wird, zu empfangen, wobei das zweite Paket ein erstes Paket umfasst, das mit einem Header eines ersten VLAN verkapselt ist, und das erste Paket eine Kennungs-ID des ersten VLAN und Daten, die an die Zielvorrichtung zu senden sind, umfasst;
**dadurch gekennzeichnet, dass**
der Header des ersten VLAN ein erstes Feld, ein zählerbezogenes PN-Feld und ein entschlüsselungstypbezogenes AE-Feld umfasst, wobei das erste Feld verwendet wird, um der Zielvorrichtung anzugeben, eine Sicherheitsverifizierung an den Daten, die an die Zielvorrichtung gesendet werden, durchzuführen, wobei das PN-Feld durch die Zielvorrichtung verwendet wird, um zu verifzieren, ob die Daten, die an die Zielvorrichtung gesendet werden, wiedergegebene Daten sind, wobei das AE-Feld durch die Zielvorrichtung verwendet wird, um zu bestimmen, ob die Daten, die an die Zielvorrichtung gesendet werden, zu entschlüsseln sind; und
ein Parsing-Modul, das zu Folgendem konfiguriert ist: Parsen des zweiten Pakets und Bestimmen, basierend auf einem ersten Feld, das in dem Header des ersten VLAN umfasst ist, ob eine Sicherheitsverifizierung an dem zweiten Paket durchzuführen ist.

13. Sicherheitsschutzeinrichtung nach Anspruch 12, wobei das zweite Paket einen ersten Prüfwert umfasst, wobei der erste Prüfwert ein Prüfwert ist, der durch die Quellvorrichtung unter Verwendung der Kennungs-ID des ersten VLAN, der Daten und des Headers des ersten VLAN bestimmt wird, und, wenn die Zielvorrichtung bestimmt, eine Sicherheitsverifizierung an dem zweiten Paket durchzuführen, die Zielvorrichtung ferner ein Überprüfungsmodul umfasst, wobei das Überprüfungsmodul zu Folgendem konfiguriert ist:
Bestimmen eines zweiten Prüfwerts basierend auf der Kennungs-ID des ersten VLAN, der Daten und des Headers des ersten VLAN; und
Verifizieren der Integrität der Daten durch Vergleichen des zweiten Prüfwerts mit dem ersten Prüfwert.

14. Computerlesbares Speichermedium, umfassend ein Programm, wobei, wenn das Programm auf einem Computer ausgeführt wird, der Computer in die Lage versetzt wird, das Verfahren nach einem der Ansprüche 1 bis 10 durchzuführen.

15. Intelligentes Fahrzeug, wobei das intelligente Fahrzeug eine Verarbeitungsschaltung und eine Speicherschaltung umfasst und die Verarbeitungsschaltung und die Speicherschaltung dazu konfiguriert sind, das Verfahren nach einem der Ansprüche 1 bis 10 durchzuführen.

## Revendications

1. Procédé de protection de sécurité, comprenant :
l'obtention, par un dispositif source, d'un niveau de sécurité d'un premier réseau local virtuel (VLAN), dans lequel le dispositif source et un dispositif destinataire correspondant au dispositif source sont des dispositifs dans le premier VLAN, le premier VLAN est l'un d'une pluralité de VLAN compris dans un Ethernet, chacun de la pluralité de VLAN correspond à un niveau de sécurité, et le niveau de sécurité de chacun de la pluralité de VLAN est pré-réglé ; et
(202) le fait de déterminer, par le dispositif source utilisant le niveau de sécurité du premier VLAN, s'il faut réaliser une protection de sécurité sur des données à envoyer au dispositif destinataire ;
**caractérisé en ce que**
lorsque le dispositif source détermine (202), en utilisant le niveau de sécurité du premier VLAN, qu'il faut réaliser une protection de sécurité sur les données à envoyer au dispositif destinataire, le procédé comprend également :
(302) l'encapsulage, par le dispositif source, d'un premier paquet en utilisant un en-tête du premier VLAN, pour obtenir un second paquet, dans lequel l'en-tête du premier VLAN comprend un premier champ, un champ PN lié au compteur, et un champ AE lié au type de déchiffrement, le premier champ étant utilisé pour indiquer au dispositif destinataire de réaliser une vérification de sécurité sur les données envoyées au dispositif destinataire, le champ PN étant utilisé par le dispositif destinataire pour vérifier si les données envoyées au dispositif destinataire sont des données relues, le champ AE étant utilisé par le dispositif destinataire pour déterminer s'il faut déchiffrer les données envoyées au dispositif destinataire, et dans lequel le premier paquet est un paquet obtenu après que le dispositif source en utilisant un identifiant ID du premier VLAN, encapsule les données à envoyer au dispositif destinataire.

2. Procédé selon la revendication 1, dans lequel le fait de déterminer (202), par le dispositif source en utilisant le niveau de sécurité du premier VLAN, s'il faut réaliser une protection de sécurité sur des données à envoyer au dispositif destinataire comprend :
(502) le fait de déterminer, par le dispositif source utilisant le niveau de sécurité du premier VLAN, qu'il faut réaliser une protection d'intégrité sur les données ; et
le procédé comprend également :
(503) la détermination, par le dispositif source, d'une valeur de vérification en utilisant l'identifiant ID du premier VLAN, des données et de l'en-tête du premier VLAN, dans lequel la valeur de vérification est utilisée pour vérifier l'intégrité des données.

3. Procédé selon la revendication 2, dans lequel le fait de déterminer (202), par le dispositif source en utilisant le niveau de sécurité du premier VLAN, s'il faut réaliser une protection de sécurité sur des données à envoyer au dispositif destinataire comprend également :
(602) le fait de déterminer, par le dispositif source en utilisant le niveau de sécurité du premier VLAN, qu'il faut réaliser une protection de confidentialité sur les données ; et
le procédé comprend également :
(603) le calcul, par le dispositif source, d'une première clé en utilisant une clé pré-partagée PSK et de l'identifiant ID du premier VLAN ; et
(604) la réalisation, par le dispositif source, d'un calcul de chiffrement sur les données en utilisant la première clé, pour obtenir les données qui sont chiffrées.

4. Procédé selon l'une quelconque des revendications 1 à 3, dans lequel le fait de déterminer (202), par le dispositif source en utilisant le niveau de sécurité du premier VLAN, s'il faut réaliser une protection de sécurité sur des données à envoyer au dispositif destinataire comprend également :
(504) le fait de déterminer, par le dispositif source en utilisant le niveau de sécurité du premier VLAN, qu'il faut réaliser une protection anti-reproduction sur les données ; et
(505) l'ajout de 1 à une valeur du champ PN lié au compteur à chaque fois que le dispositif source envoie des données au dispositif destinataire, de sorte que le dispositif destinataire vérifie, en utilisant le champ PN, si les données sont des données reproduites.

5. Procédé selon la revendication 1, dans lequel le fait de déterminer, par le dispositif source en utilisant le niveau de sécurité du premier VLAN, s'il faut réaliser une protection de sécurité sur des données à envoyer au dispositif destinataire comprend :
le fait de déterminer, par le dispositif source utilisant le niveau de sécurité du premier VLAN, qu'il ne faut pas réaliser une protection de sécurité sur les données.

6. Procédé de protection de sécurité, comprenant :
(506, 605) la réception, par un dispositif destinataire, d'un second paquet envoyé par un dispositif source, dans lequel le second paquet comprend un premier paquet encapsulé avec un en-tête d'un premier VLAN, et le premier paquet comprend un identifiant ID du premier VLAN, et les données à envoyer au dispositif destinataire,
**caractérisé en ce que**
l'en-tête du premier VLAN comprend un premier champ, un champ PN lié au compteur, et un champ AE lié au type de déchiffrement, le premier champ est utilisé pour indiquer au dispositif destinataire de réaliser une vérification de sécurité sur les données envoyées au dispositif destinataire, le champ PN est utilisé par le dispositif destinataire pour vérifier si les données envoyées au dispositif destinataire sont des données reproduites, le champ AE étant utilisé par le dispositif destinataire pour déterminer s'il faut déchiffrer les données envoyées au dispositif destinataire ; et
(507, 606) l'analyse, par le dispositif destinataire, du second paquet, et le fait de déterminer, en utilisant le premier champ compris dans l'en-tête du premier VLAN, s'il faut réaliser une vérification de sécurité sur le second paquet.

7. Procédé selon la revendication 6, dans lequel le second paquet comprend une première valeur de contrôle, la première valeur de contrôle est une valeur de contrôle déterminée par le dispositif source en utilisant l'identifiant ID du premier VLAN, des données, et de l'en-tête du premier VLAN, et lorsque le dispositif destinataire détermine qu'il faut réaliser une vérification de sécurité sur le second paquet, le procédé comprend également :
la détermination, par le dispositif destinataire, d'une seconde valeur de contrôle en utilisant l'identifiant ID du premier VLAN, des données, et de l'en-tête du premier VLAN ; et
la vérification, par le dispositif destinataire, de l'intégrité des données en comparant la seconde valeur de contrôle à la première valeur de contrôle.

8. Procédé selon la revendication 6, dans lequel, lorsque le dispositif destinataire détermine qu'il faut réaliser une vérification de sécurité sur le second paquet, le procédé comprend également :
(607) le fait de déterminer, par le dispositif destinataire en utilisant le champ AE lié au type de déchiffrement compris dans le second paquet, s'il faut déchiffrer les données ; et
lorsque le dispositif destinataire détermine, en utilisant le champ AE, qu'il faut décrypter les données, le procédé comprend également :
(608) la réalisation, par le dispositif destinataire, d'un calcul de déchiffrement sur les données en utilisant une première clé, pour obtenir les données qui sont déchiffrées, dans lequel la première clé est une clé obtenue par le dispositif destinataire par calcul en utilisant une clé pré-partagée PSK et l'identifiant ID du premier VLAN.

9. Procédé selon la revendication 6, dans lequel lorsque le dispositif destinataire détermine, en utilisant le premier champ compris dans l'en-tête du premier VLAN, qu'il faut de réaliser une vérification de sécurité sur le second paquet, le procédé comprend également :
(710) le fait de vérifier, par le dispositif destinataire en utilisant le champ PN compris dans l'en-tête du premier VLAN, si les données reçues sont des données reproduites ; et
le stockage, par le dispositif destinataire, d'une valeur du champ PN si les données sont des données non reproduites.

10. Procédé selon la revendication 6 ou 7, dans lequel l'analyse, par le dispositif destinataire, du second paquet, et le fait de déterminer, en utilisant un premier champ compris dans l'en-tête du premier VLAN, s'il faut réaliser une vérification de sécurité sur le second paquet comprend :
l'analyse, par le dispositif destinataire, du second paquet, et le fait de déterminer, en utilisant le premier champ compris dans l'en-tête du premier VLAN, qu'il ne faut pas réaliser une vérification de sécurité sur le second paquet.

11. Appareil de protection de sécurité, dans lequel l'appareil de protection de sécurité est un dispositif source et comprend :
un module d'obtention, configuré pour obtenir un niveau de sécurité d'un premier réseau local virtuel (VLAN), dans lequel le dispositif source et un dispositif destinataire correspondant au dispositif source sont des dispositifs dans le premier VLAN, le premier VLAN est l'un d'une pluralité de VLAN compris dans un Ethernet, chacun de la pluralité de VLAN correspond à un niveau de sécurité, et le niveau de sécurité de chacun de la pluralité de VLAN est pré-réglé ; et
un module de protection, configuré pour déterminer, en utilisant un niveau de sécurité qui est du premier VLAN et qui est obtenu par le module d'obtention, s'il faut réaliser une protection de sécurité sur des données à envoyer au dispositif destinataire ;
**caractérisé en ce que**
le dispositif source comprend également un module d'encapsulation, configuré pour :
encapsuler un premier paquet en utilisant un en-tête du premier VLAN, pour obtenir un second paquet, dans lequel l'en-tête du premier VLAN comprend un premier champ, un champ PN lié au compteur, et un champ AE lié au type de déchiffrement, le premier champ est utilisé pour indiquer au dispositif destinataire de réaliser une vérification de sécurité sur les données, le champ PN est utilisé par le dispositif destinataire pour vérifier si les données sont des données reproduites, le champ AE est utilisé par le dispositif destinataire pour déterminer s'il faut déchiffrer les données, et le premier paquet est un paquet obtenu après que le dispositif source encapsule les données en utilisant un identifiant ID du premier VLAN.

12. Appareil de protection de sécurité, dans lequel l'appareil de protection de sécurité est un dispositif destinataire et comprend :
un module de réception, configuré pour recevoir un second paquet envoyé par un dispositif source, dans lequel le second paquet comprend un premier paquet encapsulé avec un en-tête d'un premier VLAN, et le premier paquet comprend un identifiant ID du premier VLAN, et les données à envoyer au dispositif destinataire ;
**caractérisé en ce que**
l'en-tête du premier VLAN comprend un premier champ, un champ PN lié au compteur, et un champ AE lié au type de déchiffrement, le premier champ est utilisé pour indiquer au dispositif destinataire de réaliser une vérification de sécurité sur les données envoyées au dispositif destinataire, le champ PN est utilisé par le dispositif destinataire pour vérifier si les données envoyées au dispositif destinataire sont des données reproduites, le champ AE étant utilisé par le dispositif destinataire pour déterminer s'il faut déchiffrer les données envoyées au dispositif destinataire ; et
un module d'analyse, configuré pour : analyser le second paquet, et déterminer, sur la base d'un premier champ compris dans l'en-tête du premier VLAN, s'il faut réaliser une vérification de sécurité sur le second paquet.

13. Dispositif de protection de sécurité selon la revendication 12, dans lequel le second paquet comprend une première valeur de contrôle, la première valeur de contrôle est une valeur de contrôle déterminée par le dispositif source en utilisant l'identifiant ID du premier VLAN, des données, et de l'en-tête du premier VLAN, et lorsque le dispositif destinataire détermine qu'il faut réaliser un contrôle de sécurité sur le second paquet, le dispositif destinataire comprend également un module de contrôle, dans lequel le module de contrôle est configuré pour :
déterminer une seconde valeur de contrôle sur la base de l'identifiant ID du premier VLAN, des données et de l'en-tête du premier VLAN ; et
vérifier l'intégrité des données en comparant la seconde valeur de contrôle à la première valeur de contrôle.

14. Support de stockage lisible par ordinateur, comprenant un programme, dans lequel, lorsque le programme est exécuté sur un ordinateur, l'ordinateur est activé pour réaliser le procédé selon l'une quelconque des revendications 1 à 10.

15. Véhicule intelligent, dans lequel le véhicule intelligent comprend un circuit de traitement et un circuit de stockage, et le circuit de traitement et le circuit de stockage sont configurés pour réaliser le procédé selon l'une quelconque des revendications 1 à 10.
